# EUROPÄISCHE PATENTSCHRIFT

(11) **EP 1 568 905 B1**
(45) Veröffentlichungstag und Bekanntmachung des Hinweises auf die Patenterteilung: **30.05.2007**
(21) Anmeldenummer: 05001522.1
(22) Anmeldetag: 26.01.2005
(51) Int. Cl.: F16D 13/75, F16D 13/58

(54) **Selbstnachstellende Kupplung**
Self adjusting clutch
Embrayage à réglage automatique

(30) Priorität: 24.02.2004 DE 102004009387; 07.10.2004 DE 102004048817
(43) Veröffentlichungstag der Anmeldung: 31.08.2005
(73) Patentinhaber: LuK Lamellen und Kupplungsbau Beteiligungs KG, 77815 Bühl (DE)
(72) Erfinder: Friedmann, Oswald, 77839 Lichtenau (DE); Reimnitz, Dirk, 77815 Bühl (DE); Meinhard, Rolf, 77815 Bühl (DE); Hoppe, Marcus, 04600 Altenburg (DE)

(56) Entgegenhaltungen:
- WO-A-03/036116
- DE-A1- 19 857 199
- US-A- 5 641 048

## Beschreibung

Die Erfindung betrifft Reibungskupplungen mit einem Gehäuse und einer mit diesem drehfest, jedoch axial verlagerbar verbundenen Anpressplatte, wobei zwischen Gehäuse und Anpressplatte eine verschwenkbare Hebelanordnung vorgesehen ist, mittels derer die Reibungskupplung betätigbar ist. Die Hebelanordnung umfasst dabei eine Mehrzahl von ringartig angeordneten Hebelelementen.

Derartige Reibungskupplungen sind beispielsweise durch die DE 103 16 445 A1, die DE 101 34 118 A1 und die DE 34 46 460 A1 vorgeschlagen worden. Durch diesen Stand der Technik sind insbesondere Reibungskupplungen bekannt geworden, die zwangsweise durch Einleitung einer externen Kraft auf die Hebelelemente geschlossen werden. Durch Entlastung der Hebelelemente werden die Reibungskupplungen wieder geöffnet.

Bei den durch die DE 103 16 445 A1 und die US 5,641,048 vorgeschlagenen Konstruktionen für Reibungskupplungen sind auch Ausgleichsvorrichtungen vorhanden, die eine Kompensation des zumindest an den Reibbelägen einer Kupplungsscheibe auftretenden Verschleißes ermöglichen. Hierfür werden verschiedene Ausgestaltungsmöglichkeiten derartiger Ausgleichsvorrichtungen vorgeschlagen.

Der vorliegenden Erfindung lag die Aufgabe zugrunde, Reibungskupplungen der eingangs genannten Art zu schaffen, bei denen durch einfaches Betätigen der Hebelelemente eine Verstellung zwischen wenigstens zwei Bauteilen einer solchen Reibungskupplung erzielt werden kann. Ein weiteres Ziel der vorliegenden Erfindung ist es, innerhalb einer Reibungskupplung der eingangs genannten Art einen Verstellmechanismus zu schaffen, der durch Betätigung der Hebelelemente eine Nachstellung innerhalb der Reibungskupplung bewirkt. Dieser Nachstellmechanismus soll dabei besonders funktionssicher sein und eine einfache Montage sowie kostengünstige Herstellung einer solchen Reibungskupplung ermöglichen.

Gemäß der Erfindung wird dies dadurch erzielt, dass ein ringartiges Bauteil der Reibungskupplung durch Verschwenken der Hebelanordnung in seiner Konizität veränderbar ist, wobei durch Konizitätsveränderungen eine Durchmesservergrößerung und -verringerung des ringartigen Bauteils erzeugt werden kann, wobei das ringartige Bauteil über den Umfang betrachtet einen die Durchmesserveränderungen durch Aufweiten und Verschmälern ermöglichenden Bereich aufweist, wobei in Umfangsrichtung des ringartigen Bauteils betrachtet beidseits dieses Bereiches jeweils eine in Umfangsrichtung wirksame Freilaufeinrichtung vorgesehen ist, die beide in die gleiche Drehrichtung eine Sperrwirkung aufweisen, die Freilaufeinrichtungen zwischen dem ringartigen Bauteil und einem weiteren Bauteil der Reibungskupplung wirksam sind, und durch das Zusammenwirken der beiden Freilaufeinrichtungen in Kombination mit Konizitätsveränderungen des ringartigen Bauteils eine Relativverdrehung zwischen dem ringartigen Bauteil und dem weiteren Bauteil erzeugt wird.

Die Hebelelemente können miteinander verbunden sein und eine ringartiges Bauteil bilden. Das ringartige Bauteil kann innerhalb der Reibungskupplung derart angeordnet und ausgestaltet sein, dass durch Verschwenken der Hebelanordnung das ringartige Bauteil in seiner Konizität veränderbar ist.

Die beiden Freilaufeinrichtungen und das ringartige Bauteil sind derart aufeinander abgestimmt, dass bei einer gezielt eingeleiteten Konizitätsveränderung der Hebelanordnung bei einer Konizitätsvergrößerung eine Durchmesserverringerung (Zusammenziehen) des ringartigen Bauteils bewirkt wird, wobei in dieser Betätigungsphase die eine Freilaufeinrichtung wirksam ist und die andere Freilaufeinrichtung sperrt, und bei einer nachfolgenden Konizitätsverringerung des ringartigen Bauteils eine Durchmesservergrößerung (Aufweitung) dieses Bauteils bewirkt wird, wobei während dieser Betätigungsphase die eine Freilaufeinrichtung nun sperrt und die andere Freilaufeinrichtung nachstellt.

Der ein Aufweiten und Zusammenziehen, also praktisch ein "Atmen" des ringartigen Bauteils ermöglichende Bereich kann in besonders einfacher Weise zumindest durch einen im Wesentlichen radial verlaufenden, in Umfangsrichtung zwischen den Freilaufeinrichtungen im ringartigen Bauteil vorgesehenen Spalt gebildet sein. Der Spalt kann vollkommen radial durchgehend ausgebildet sein. Die dem wenigstens einen Spalt benachbarten Bereiche des ringförmigen Bauteils können jedoch auch über ein verhältnismäßig weiches, also eine geringe Federsteifigkeit aufweisendes Mittel miteinander verbunden sein. Die Federsteifigkeit dieses Mittels muss in Bezug auf die übrigen Federeigenschaften des ringförmigen Bauteils derart abgestimmt sein, dass ein elastisches Aufweiten und Zusammenziehen des ringförmigen Bauteils infolge einer Konizitätsveränderung gewährleistet ist.

Die erfindungsgemäß ausgestalteten Reibungskupplungen können insbesondere in Verbindung mit Kraftfahrzeugen Verwendung finden, bei denen zum Übertragen des Drehmomentes zwischen Motor und Getriebe wenigstens eine Reibungskupplung vorhanden ist, wobei diese Reibungskupplung über ein Steuer- bzw. Regelsystem automatisiert betätigt wird. Dabei kann das Schaltgetriebe manuell und/oder ebenfalls automatisiert betätigbar sein. Automatisierte Reibungskupplungen und/oder Getriebe sind beispielsweise durch die DE 198 23 089 A1, die DE 197 50 824 A1, die DE 44 33 825 A1 und die DE 40 42 694 sowie durch den in diesen angegebenen Stand der Technik bekannt geworden. Die erfindungsgemäß ausgestalteten Reibungskupplungen können insbesondere in Verbindung mit Antriebssystemen für Kraftfahrzeuge verwendet werden, bei denen die Betätigungseinrichtungen bzw. die Aktoriksysteme für die entsprechende Reibungskupplung eine Positionsermittlung und Verarbeitung zumindest einzelner Punkte des Betätigungszustandes der Reibungskupplung ermöglichen. Dabei ist es vorteilhaft, wenn zumindest ein dem voll ausgerückten und/oder dem voll eingerückten Zustand der entsprechenden Reibungskupplung zugeordneter Wert ermittelbar und abspeicherbar ist. Die ermittelten Werte können gegebenenfalls in Abhängigkeit von verschiedenen Parametern korrigiert werden. Die Verwendung derartiger Betätigungssysteme für Reibungskupplungen ermöglicht es, eine Veränderung innerhalb des Betätigungssystems infolge eines aufgetretenen Verschleißes, zum Beispiel an den Reibbelägen der Kupplungsscheibe, zu ermitteln. Bei Ermittlung einer definierten Größe der Veränderung, zum Beispiel im Betätigungsweg der Reibungskupplung, kann eine gezielte, über den normalen Betätigungsweg der Reibungskupplung hinausgehende Verlagerung der zum Ein- und Ausrücken der Reibungskupplung betätigbaren Hebelelemente erfolgen. Durch eine derartige Betätigung kann die Relativverdrehung zwischen dem ringartigen Bauteil bzw. den Hebelelementen und einem weiteren Bauteil der Reibungskupplung erzeugt werden.

Eine besonders kostengünstige Herstellung des ringartigen Bauteils kann durch einstückige Ausgestaltung desselben gewährleistet werden. Die Hebelanordnung kann einstückig ausgebildet oder durch einzelne Hebelelemente gebildet sein, welche über ein vorzugsweise Federeigenschaften aufweisendes, zusätzliches Element in ringartiger Anordnung zusammengehalten werden. Derartige Hebelanordnungen sind beispielsweise durch die DE 33 21 822 A1 oder die DE 30 24 196 A1 vorgeschlagen worden.

Eine besonders vorteilhafte Ausgestaltung der Hebelanordnung kann dadurch ermöglicht werden, dass die einzelnen Hebelelemente über einstückig mit diesen ausgebildeten Verbindungsbereichen gekoppelt sind. Diese Verbindungsbereiche können derart ausgestaltet sein, dass sie die einzelnen Hebelelemente so miteinander verbinden, dass praktisch ein ringartiger Federkörper entsteht, der tellerfederähnlich in seiner Konizität veränderbar ist.

In besonders vorteilhafter Weise kann das erfindungsgemäß ausgestaltete, ringartige Bauteil Bestandteil einer Verschleißausgleichsvorrichtung sein. Zur Bildung einer derartigen Verschleißausgleichsvorrichtung können zumindest die Hebelelemente in Umfangsrichtung verlaufende, sich axial erhebende Auflauframpen aufweisen, die gewährleisten, dass bei einer Relativverdrehung zwischen dem ringartigen Bauteil und dem zu diesem relativ verdrehbaren Bauteil eine axiale Verlagerung zumindest der Hebelelemente oder der von diesen beaufschlagbaren Anpressplatte erfolgt. Diese axiale Verlagerung kann zum Ausgleich des insbesondere an den Reibbelägen der Kupplungsscheibe entstehenden Verschleißes benutzt werden. Die entweder unmittelbar oder mittelbar von den Hebelelementen getragenen Auflauframpen können in vorteilhafter Weise mit von der Anpressplatte und/oder dem Gehäuse getragenen Gegenauflauframpen zusammenwirken. Diese Gegenauflauframpen können durch zumindest ein zusätzliches Bauteil gebildet sein oder aber unmittelbar an der Anpressplatte und/oder am Kupplungsgehäuse angeformt sein.

Eine einfache Ausgestaltung der Freilaufeinrichtungen kann beispielsweise dadurch gewährleistet werden, dass diese ineinander greifende Profilierungen und Gegenprofilierungen aufweisen, welche in die eine Relatiwerdrehrichtung eine Sperrwirkung erzeugen, jedoch in die andere Relativverdrehrichtung eine Verstellung bzw. Nachstellung ermöglichen. Diese Profilierungen und Gegenprofilierungen können dabei in vorteilhafter Weise zumindest zeitweise federnd verspannt sein. Die Profilierungen und Gegenprofilierungen können in vorteilhafter Weise zahnartig ausgebildet sein. Die Gestaltung der Zähne kann dabei sägezahnartig ausgebildet sein, so dass eine Seitenflanke der Zähne eine Auflauframpe bildet, während die andere Seite der Zähne derart steil verläuft, dass eine Sperrwirkung bzw. Blockierung zwischen den Profilierungen und Gegenprofilierungen in die entsprechende Relativbewegungsrichtung vorhanden ist.

Eine kostengünstige Herstellung der entsprechenden Bauteile kann dadurch gewährleistet werden, dass die Profilierungen und/oder Gegenprofilierungen mit dem diese tragenden Bauteil einstückig ausgebildet sind.

Für die Funktion der Freilaufeinrichtungen kann es besonders vorteilhaft sein, wenn die Profilierungen und/oder die Gegenprofilierungen von einem als Federstab ausgebildeten Bereich getragen sind. Dieser federnde Bereich bzw. der Federstab kann dabei in Umfangsrichtung verlaufen und zumindest radial federnd ausgebildet sein.

Es kann auch zweckmäßig sein, wenn das ringförmige Bauteil derart ausgestaltet ist, dass dieses aufgrund von Eigenfedereigenschaften in eine kegelstumpfförmig ausgestellte Lage tendiert, also praktisch selbsttätig sich kegelstumpfartig aufstellt. Die kegelstumpfförmig aufgestellte Lage kann dabei in vorteilhafter Weise einem geöffneten Zustand der Reibungskupplung entsprechen. Dies bedeutet also, dass zum Schließen der Reibungskupplung das ringförmige Bauteil entgegen seiner Federeigenschaften verschwenkt bzw. in seiner Konizität verändert werden muss.

Wie bereits erwähnt, ist es besonders vorteilhaft, wenn die erfindungsgemäß ausgestalteten Reibungskupplungen automatisiert betrieben werden. Dabei ist es zweckmäßig, wenn das mit den Hebelelementen des ringförmigen Bauteils zusammenwirkende Betätigungssystem zumindest einen Teil der zur Drehmomentübertragung erforderlichen Schließkraft der Reibungskupplung aufbringt. Diese Schließkraft wird vorzugsweise auf die radial inneren Zungenbereiche der Hebelelemente ausgeübt.

Zur Betätigung der Reibungskupplung eignet sich in besonders vorteilhafter Weise ein Betätigungssystem, das zum Übertragen eines zum Ein- und Ausrücken der Reibungskupplung erforderlichen, normalen Betätigungsweges auf die Hebelelemente eine Betätigungseinrichtung bzw. einen Aktor aufweist, wobei in Abhängigkeit eines durch das Betätigungssystem bzw. durch eine mit diesem zusammenwirkende Steuereinheit ermittelten Verschleißes bzw. ein über den normalen Betätigungsweg hinausgehender Verstellweg auf die Hebelelemente übertragbar ist. Mittels dieses Verstell- bzw. Nachstellweges kann die in der Reibungskupplung vorhandene Verschleißausgleichsvorrichtung bzw. Verschleißnachstelleinrichtung entsprechend verstellt werden. Besonders vorteilhaft kann es sein, wenn die Reibungskupplung und das mit dieser zusammenarbeitende Betätigungssystem derart ausgelegt sind, dass der zum Durchführen der vorerwähnten Verstellung innerhalb der Reibungskupplung erforderliche zusätzliche, über den normalen Betätigungsweg hinausgehende Weg sich in Einrück- oder in Ausrückrichtung der Reibungskupplung an den normalen Ausrückbetätigungsweg anschließt.

Bei einer Reibungskupplung mit einem Gehäuse und einer mit diesem drehfest, jedoch axial begrenzt verlagerbar verbundenen Anpressplatte sowie einer zwischen Gehäuse und Anpressplatte verschwenkbar angeordneten Hebelanordnung zur Betätigung der Reibungskupplung kann es auch besonders vorteilhaft sein, wenn diese Reibungskupplung eine zumindest den Verschleiß der Reibbeläge einer mit dieser zusammenwirkenden Kupplungsscheibe kompensierende Ausgleichsvorrichtung besitzt, wobei zum normalen Öffnen und Schließen der Reibungskupplung die Hebelanordnung innerhalb eines im Wesentlichen konstanten Verschwenkbereiches bewegbar ist und die durch die Ausgleichsvorrichtung erzeugbare Nachstellung durch eine Verschwenkbewegung dieser Hebelanordnung bewirkt wird, welche über den normalen Verschwenkbereich hinausgeht und vorzugsweise in Schließ- oder in Öffnungsrichtung der Reibungskupplung stattfindet. Es soll also zur Durchführung der erwähnten Verschleißnachstellung eine Schwenkbewegung der Hebelanordnung erfolgen, die größer ist als der zum normalen Öffnen oder Schließen der Reibungskupplung erforderliche Betätigungs- bzw. Verschwenkbereich der Hebelanordnung.

Bezüglich der Funktionsweise, Anordnung und Ausgestaltungsmöglichkeiten der vorerwähnten Rampen- und Gegenrampen einer innerhalb der Reibungskupplung vorgesehenen Verschleißausgleichsvorrichtung wird auf die ebenfalls selbstnachstellende Reibungskupplungen betreffenden DE 42 39 291, DE 42 39 289, DE 43 22 677, DE 195 24 827 und DE 199 11 667 verwiesen.

Besonders vorteilhaft kann es sein, wenn die Reibungskupplung bzw. die darin integrierte Verschleißausgleichsvorrichtung derart ausgestaltet ist, dass eine Nachstellung nur bei sehr geringen Motordrehzahlen, zum Beispiel Leerlaufdrehzahl, oder aber vorzugsweise bei Stillstand, also nicht rotierender Reibungskupplung, erfolgen kann. Um die entsprechende Betätigung, beispielsweise bei stehendem Motor bzw. bei Inbetriebnahme des Kraftfahrzeuges durchführen zu können, kann das die automatisierte Reibungskupplung und/oder das automatisierte Getriebe betätigende System entsprechende Mittel bzw. Sensoren aufweisen, die vor der Inbetriebnahme des Motors eine entsprechende Nachstellbetätigung der Reibungskupplung auslösen. Falls erforderlich, kann der Startvorgang des Motors bis zumindest annähernd der Beendigung dieser Nachstellbetätigung der Reibungskupplung blockiert werden.

Weitere Vorteile und zweckmäßige Weiterbildungen des Erfindungsgegenstandes sind aus der folgenden Figurenbeschreibung zu entnehmen.

Dabei zeigen:
- Fig. 1 bis 5: verschiedene Phasen der Betätigung einer erfindungsgemäßen, selbstnachstellenden Reibungskupplung, aus denen die Funktion und die Wirkungsweise ein zelner, die Nachstellvorrichtung bildender Bauteile bzw. Bauteilbereiche entnehmbar sind,
- Figuren 1a bis 5a: die den Figuren 1 bis 5 zugeordneten und im Schnitt dargestellten Betätigungszustände der Reibungskupplung mit den zugehörigen Winkelstellungen der Hebelanordnung des durch diese gebildeten, ringartigen Bauteils,
- Figur 6: eine Ausführungsvariante eines einstückig ausgebildeten, ringartigen Bauteils,
- Figur 7: eine schematisch dargestellte Doppelkupplung im Schnitt, bei der erfindungsgemäß ausgestaltete, ringartige Bauteile zur Bildung von Nachstellvorrichtungen Verwendung finden,
- Fig. 8 bis 11: weitere Ausführungsvarianten von erfindungsgemäß ausgestalteten, ringartigen Bauteilen, welche auch eine Hebelanordnung bilden,
- Fig. 12 bis 16: verschiedene Phasen der Betätigung einer Ausführungsvariante einer erfindungsgemäßen, selbstnachstellenden Reibungskupplung, bei der die Verschleißnachstellung durch einen Einrücküberweg ausgelöst wird,
- Fig. 12a bis 16a: die den Figuren 12 bis 16 zugeordneten und im Schnitt dargestellten Betätigungszustände der entsprechenden Reibungskupplung mit den zugehörigen Winkelstellungen der Hebelanordnung.
- Figur 17: eine Ausgestaltung einer Hebelanordnung, die gleichzeitig als ringartiges Bauteil ausgebildet ist,
- Figur 18: eine weitere Ausführungsvariante einer einstückig ausgebildeten Hebelanordnung bzw. eines einstückig ausgebildeten, ringartigen Bauteils mit Hebeln,

- Figur 19: eine Reibungskupplung im Schnitt mit einem den Verschleißausgleich auslösenden ringartigen Bauteil, das zwischen dem Kupplungsgehäuse und einer separaten Hebelanordnung wirksam ist,
- Figur 20: die Ausgestaltung einer Doppelkupplung, wobei jede Kupplung eine Hebelanordnung und ein separates, ringartiges Bauteil besitzt,
- Figur 21: ein ringartiges Bauteil, welches wirkungsmäßig zwischen einem Kupplungsgehäuse und einer Hebelanordnung einsetzbar ist, wie dies der Fall ist bei den Reibungskupplungen gemäß Figur 19 und 20,
- Fig. 22 bis 24: Ausführungsvarianten von ringartigen Bauteilen, die in Verbindung mit einer Hebelanordnung in einer Reibungskupplung verwendbar sind,
- Fig. 25 bis 28: eine weitere konstruktive Ausgestaltung einer erfindungsgemäßen Reibungskupplung, welche eine Hebelanordnung und ein separates, ringartiges Bauteil aufweist. Die Figur 25 zeigt dabei die Reibungskupplung im Schnitt, die Figuren 26 und 27 eine schematische Darstellung der Reibungskupplung, wobei in Figur 26 schematisch die Hebelanordnung bei geöffneter Reibungskupplung und in Figur 27 eine Darstellung bei geschlossener Reibungskupplung repräsentiert ist. Figur 28 zeigt eine Draufsicht des die Hebelanordnung bildenden Bauteils.
Wie beispielsweise aus den Figuren 1 und 1a zu entnehmen ist, besitzt das Kupplungsaggregat 1 eine Reibungskupplung 2, die auf einer Gegendruckplatte, wie z. B. einem Schwungrad 3, montiert ist.

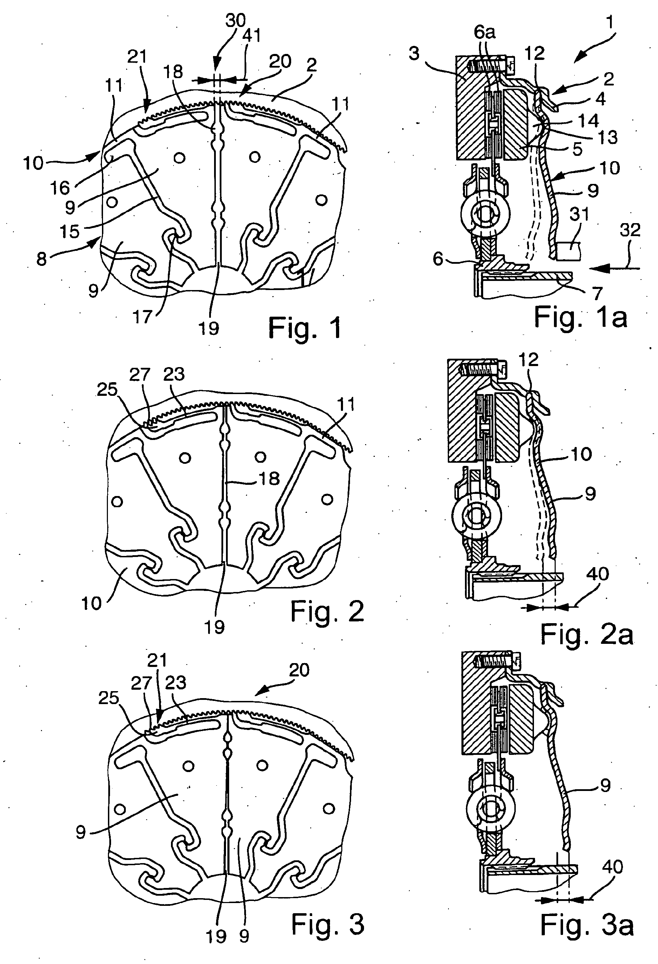

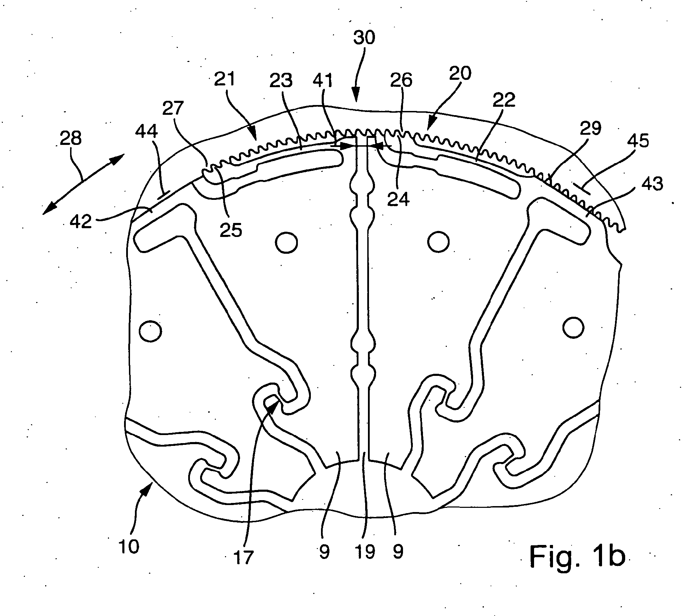

Die Reibungskupplung 2 besitzt ein Gehäuse 4, das mit der Gegendruckplatte 3 fest verbunden ist, und zwar bei dem dargestellten Ausführungsbeispiel mittels Schraubverbindungen. Die Anpressplatte 5 der Reibungskupplung 2 ist mit dem als Blechdeckel ausgebildeten Gehäuse 4 drehfest, jedoch axial begrenzt verlagerbar verbunden. Letzteres kann beispielsweise über Blattfederkoppelungen erfolgen. Zwischen der Anpressplatte 5 und der Gegendruckplatte 3 sind die Reibbeläge 6a einer Kupplungsscheibe 6 einspannbar. Die Kupplungsscheibe 6 ist mit einer Getriebeeingangswelle 7 in an sich bekannter Weise zur Drehmomentübertragung verbunden. Die in Figur 1a voll ausgezogen dargestellte Position der einzelnen Bauteile entspricht dem normalen, geöffneten Zustand der Reibungskupplung 2.

Die in Figur 1a punktiert dargestellte Stellung der Hebelanordnung entspricht derjenigen Position dieser Hebelanordnung bei geschlossener Reibungskupplung 2. Bei geschlossener Reibungskupplung 2 ist die Anpressplatte 5 gegenüber der dargestellten, voll ausgezogenen Lage entsprechend nach links verlagert, und zwar um einen Betrag, der der punktierten Position der Hebelanordnung entspricht.

Wie aus Figur 1 zu entnehmen ist, besteht die Hebelanordnung 8 aus einer Mehrzahl von ringartig angeordneten Hebelelementen 9, die derart miteinander verbunden sind, dass sie ein ringartiges Bauteil 10 bilden. Bei dem dargestellten Ausführungsbeispiel sind hierfür die Hebelelemente 9 umfangsmäßig über Verbindungselemente 11 miteinander gekoppelt. Bei dem dargestellten Ausführungsbeispiel sind diese Verbindungselemente 11 durch einstückig mit den Hebelelementen 9 ausgebildete, sich in Umfangsrichtung erstreckende Stege 11 gebildet, welche hier am Außenumfang des ringartigen Bauteils 10 vorgesehen sind. Diese Verbindungselemente bzw. Stege 11 besitzen eine Eigenelastizität, die eine Konizitätsveränderung des ringartigen Bauteils und somit ein Verschwenken der Hebelelemente 9 ermöglicht.

Wie aus Figur 1a zu entnehmen ist, ist das ringartige Bauteil 10 bzw. sind die Hebelelemente 9 am Kupplungsgehäuse 4 verschwenkbar abgestützt, und zwar über eine Verschwenklagerung 12. Bei dem dargestellten Ausführungsbeispiel ist die Verschwenklagerung 12 in Bezug auf das ringartige Bauteil 10 derart angeordnet, dass die Hebelelemente 9 als einarmige Hebel um die Verschwenklagerung 12 verschwenkbar sind.

Das ringartige Bauteil 10 bzw. die Hebelelemente 9 stützen sich über einen radial weiter innen liegenden, ringförmigen Bereich 13 an der Anpressplatte 5 ab, und zwar bei der dargestellten Ausführungsform an den Nocken 14 dieser Anpressplatte 5.

Die einzelnen Hebelelemente 9 sind voneinander durch Schlitze 15 getrennt, die radial außen in umfangsmäßige Erweiterungen 16 münden, welche zur Bildung der Verbindungselemente 11 dienen. Zwischen den einzelnen Hebelelementen 9 sind Anschläge 17 vorgesehen, die verhältnismäßig weit radial innen liegend, also beabstandet von den Verbindungselementen 11, angeordnet sind. Diese Anschläge 17 werden, wie im Folgenden noch näher erläutert, bei einer Betätigung bzw. Konizitätsveränderung des ringartigen Bauteils 10 wirksam.

Bei dem in den Figuren dargestellten Ausführungsbeispiel sind diese Anschläge 17 durch eine entsprechende Ausgestaltung der Schlitze 15 gebildet, und zwar bei dem dargestellten Ausführungsbeispiel durch eine im Wesentlichen radial verlaufende Schlitzverengung. Hierfür besitzen die Schlitze 15 einen S-förmig ausgebildeten Bereich.

Durch die Anschläge 17 wird die während einer Betätigung des ringartigen Bauteils 10 auftretende, umfangsmäßige Entfernungsvergrößerung zwischen den einzelnen Hebelelementen 9 begrenzt. Diese Entfernungsvergrößerung erfolgt während einer Vergrößerung der Konizität des ringartigen Bauteils 10 zum Zwecke einer Nachstellung des Verschleißes, welcher beispielsweise an den Reibbelägen 6a der Kupplungsscheibe 6 aufgetreten ist.

Die vorerwähnte Verschleißnachstellung wird im Folgenden noch näher erläutert. Um diese Verschleißnachstellung zu gewährleisten, ist bei dem dargestellten Ausführungsbeispiel eine Relativverdrehung zwischen dem ringartigen Bauteil 10 und der Anpressplatte 5 oder aber einem von der Anpressplatte 5 getragenen Bauteil notwendig.

Bei dem konkret dargestellten Ausführungsbeispiel erfolgt bei einer Verschleißnachstellung eine Verdrehung zwischen dem ringartigen Bauteil 10 und dem Gehäuse 4.

Die Verschleißnachstellung erfolgt durch entsprechende axiale Verlagerung der Anpressplatte 5 in Richtung der Gegendruckplatte 3. Hierfür sind zwischen dem ringartigen Bauteil 10 bzw. dem dieses bildende Hebelelement 9 und der Anpressplatte 5 in Umfangsrichtung verlaufende, in axialer Richtung sich erhebende Rampen vorgesehen.

Bezüglich der Ausgestaltung, Wirkung und Bemessung derartiger Rampen wird beispielsweise auf die DE 42 39 291, DE 42 39 289, DE 43 22 677, DE 195 24 827 und DE 199 11 667 verwiesen, welche selbstnachstellende Kupplungen beschreiben.

Sofern an der Anpressplatte 5 Rampen vorgesehen sind, können diese zum Beispiel einstückig mit den Nocken 14 ausgebildet sein oder aber an einem Bauteil vorgesehen werden, welches zwischen dem ringartigen Bauteil 10 und der Anpressplatte 5 angeordnet ist.

Alternativ oder zusätzlich zu den vorerwähnten Auflauframpen zwischen dem ringartigen Bauteil 10 und der Anpressplatte 5 können auch Auflauframpen zwischen dem ringartigen Bauteil 10 und dem Gehäuse 4 angeordnet sein, und zwar beispielsweise im Bereich der Verschwenklagerung 12 bzw. angrenzend an diese Verschwenklagerung 12.

Wie aus Figur 1 zu entnehmen ist, besitzt das ringartige Bauteil 10 einen eine Durchmesserveränderung dieses Bauteils ermöglichenden Bereich 18, der bei dem dargestellten Ausführungsbeispiel durch einen Trennschlitz bzw. Spalt 19 gebildet ist.

Beidseits des Bereiches 18 bzw. des Trennschlitzes 19 besitzt das ringartige Bauteil 10 freilaufähnliche Einrichtungen 20, 21, die, wie im Folgenden noch näher beschrieben wird, eine Verdrehung des ringartigen Bauteils 10 gegenüber einem anderen Bauteil, welches hier durch das Gehäuse 4 gebildet ist, bewirken. Aufgrund einer derartigen Relativverdrehung wird das ringartige Bauteil auch gegenüber anderen Bauteilen des Kupplungsaggregates 1, wie insbesondere der Anpressplatte 5, verdreht.

Im Folgenden werden der Einfachheit halber die freilaufähnlichen Einrichtungen 20, 21 als Freilaufeinrichtungen bezeichnet. Diese Freilaufeinrichtungen 20, 21 bilden praktisch eine Fördereinrichtung, die in Kombination mit Konizitätsveränderungen bzw. Schwenkbewegungen des durch eine Hebelanordnung 8 gebildeten, ringartigen Bauteils eine Drehbewegung zwischen diesem Bauteil 10 und einem anderen Bauteil, das hier durch das Gehäuse 4 gebildet ist, bewirkt.

Wie aus der die Figur 1 im vergrößerten Maßstab darstellenden Figur 1b zu entnehmen ist, sind bei dem dargestellten Ausführungsbeispiel die beiden Freilaufeinrichtungen 20, 21 ähnlich bzw. praktisch gleich ausgebildet.

Die Freilaufeinrichtungen 20, 21 besitzen ein elastisches bzw. federndes Element 22, 23, welches eine Profilierung 24, 25 trägt. Diese Profilierungen 24, 25 wirken mit einer Gegenprofilierung 26, 27 zusammen.

Die ineinander greifenden Profilierungen 24, 25 und Gegenprofilierungen 26, 27 sind derart aufeinander abgestimmt, dass, in Umfangsrichtung 28 betrachtet, bei dem dargestellten Ausführungsbeispiel sich die Profilierungen 24, 25 gegenüber den Gegenprofilierungen 26, 27 im Uhrzeigersinn verdrehen können, wohingegen entgegen der Uhrzeigerverdrehung eine Sperrwirkung zwischen diesen Profilierungen und Gegenprofilierungen vorhanden ist.

Bei dem dargestellten Ausführungsbeispiel sind die Profilierungen 24, 25 durch Verzahnungen 24, 25 gebildet, welche in Gegenverzahnungen 26, 27, welche die Gegenprofilierungen bilden, eingreifen. Die Flanken dieser Verzahnungen und Gegenverzahnungen sind bezüglich ihres Verlaufes bzw. ihrer schrägen Anordnung derart ausgebildet, dass die vorerwähnten Freilauf- bzw. Sperreigenschaften gegeben sind.

Die elastischen bzw. federnden Elemente 22, 23 sind hier durch einstückig mit jeweils einem Hebelelement 9 bzw. dem ringartigen Bauteil 10 ausgestaltete Federstäbe 22, 23 gebildet, die als elastische Biegebalken 22, 23 wirksam sind. Die Verzahnungen 24, 25 sind jeweils am entsprechenden, freien Ende eines Federstabes 22, 23 angeformt. Die als Biegebalken wirksamen Federstäbe 22, 23 gewährleisten eine radiale Bewegungsmöglichkeit der Zähne 24, 25 gegenüber den übrigen angrenzenden Bereichen des ringartigen Bauteils 10.

Die mit den Zähnen 24, 25 zusammenwirkenden Gegenzähne 26, 27 sind bei dem dargestellten Ausführungsbeispiel als durchgehendes, verzahntes Segment 29 ausgebildet. Die umfangsmäßige Erstreckung dieses Verzahnungssegmentes 29 ist derart bemessen, dass über die gesamte Lebensdauer der Reibungskupplung, also über den gesamt erforderlichen Nachstellweg, ein entsprechendes Zusammenwirken zwischen den Verzahnungen 24, 25 und Gegenverzahnungen.26, 27 gewährleistet ist.

Bei dem dargestellten Ausführungsbeispiel sind die Gegenverzahnungen 26, 27 unmittelbar in das aus Blech hergestellte Gehäuse 4 eingeprägt. Diese Gegenverzahnungen 26, 27 könnten jedoch auch durch ein zusätzliches Bauteil gebildet sein, welches beispielsweise vom Gehäuse 4 getragen wird. Auch die federnden Elemente 22, 23 mit den darauf vorgesehenen Verzahnungen 24, 25 könnten durch separate Bauteile gebildet sein, welche an entsprechenden Hebelelementen 9 befestigt sind.

Bei dem dargestellten Ausführungsbeispiel sind die Freilaufeinrichtungen 20, 21 Bestandteil einer Nachstelleinrichtung 30, die ihrerseits wiederum Bestandteil einer Verschleißausgleichsvorrichtung ist, mittels derer zumindest der an den Reibbelägen 6a einer Kupplungsscheibe 6 auftretende Verschleiß kompensiert werden kann.

Die vorgeschlagene Nachstelleinrichtung 30 eignet sich in besonders vorteilhafter Weise für so genannte zugedrückte Kupplungen mit automatisierter Betätigung. Bei derartigen automatisierten Betätigungen wird das Kupplungsaggregat 1 in Abhängigkeit von Fahrparametern betätigt, die insbesondere Motorparameter, Getriebeparameter und vom Fahrer gewünschte Fahrzustände darstellen. Die Betätigung erfolgt dabei mittels wenigstens eines Aktors, der zum Beispiel einen Elektromotor beinhalten kann. Es sind jedoch auch hydraulische oder pneumatische Systeme oder Kombinationen derartiger Systeme verwendbar.

In diesem Zusammenhang wird auf den bereits zitierten Stand der Technik verwiesen. Es wird im Rahmen der vorliegenden Anmeldung auf diesen Stand der Technik Bezug genommen, weshalb auf eine detaillierte Beschreibung derartiger Betätigungssysteme bzw. Betätigungsstrategien für Kupplungsaggregate verzichtet wird.

In Figur 1a ist schematisch ein Bestandteil 31 eines Aktuatorsystems dargestellt, mittels dessen auf die Hebelelemente 9 in Richtung des Pfeils 32 eine Schließkraft ausgeübt werden kann. Das Element 31 kann beispielsweise ein Betätigungslager umfassen, welches einen mit den Hebelelementen 9 umlaufenden Lagerring besitzt.

Dass das Betätigungselement 31 umfassende Aktorsystem besitzt, wie dies aus dem Stand der Technik zu entnehmen ist, ein Steuergerät bzw. wirkt mit einem Steuergerät zusammen. Das Aktorsystem umfasst ein mittelbar oder unmittelbar die axiale Lage des Betätigungselementes 31 ermittelndes Sensorsystem. Dieses Sensorsystem ermöglicht eine definierte axiale Betätigung des Betätigungselementes 31 und somit auch eine definierte Verschwenkung der das ringartige Bauteil 10 bildenden Hebelelemente 9.

Zum Schließen des Kupplungsaggregates 1 werden die Hebelelemente 9 mittels des Betätigungselementes 31 in Richtung des Pfeils 32 in Figur 1a von der voll ausgezogen dargestellten Lage dieser Hebelelemente 9 in die punktiert dargestellte Lage dieser Hebelelemente 9 verschwenkt. Diese Verschwenkbewegung würde ohne Verschleiß an den Reibbelägen 6a der Kupplungsscheibe 6 praktisch konstant bleiben. Aufgrund von auftretendem Verschleiß an diesen Reibbelägen 6a verändert sich jedoch der Weg des Betätigungselementes 31.

Sobald eine einen vorgegebenen Wert überschreitende Veränderung des durch das Betätigungselement 31 zurückgelegten Weges durch das an ein Steuergerät angeschlossene Sensorsystem ermittelt wird, kann eine gezielte Betätigung bzw. Verschwenkung der Hebelelemente 9 erfolgen, mittels derer die Veränderung des Betätigungsweges ausgeglichen bzw. kompensiert werden kann. Dies erfolgt bei dem dargestellten Ausführungsbeispiel dadurch, dass das ringartige Bauteil 10 bzw. die Hebelelemente 9 durch das Betätigungselement 31 entlastet werden, wodurch die Hebelelemente 9 um die Verschwenklagerung 12 eine Verschwenkbewegung entgegen des Pfeils 32 vollführen. Diese Schwenkbewegung ist zum Beispiel in Figur 2a ersichtlich. In Figur 2a ist punktiert diejenige Position der Hebel 9 angedeutet, welche der voll ausgezogenen Position gemäß Figur 1a entspricht. Gegenüber dieser Position wurden die Hebel 9 um einen Axialweg 40 im Bereich der Zungenspitzen nach rechts verlagert. Durch diese Verlagerung bekommt das ringartige Bauteil 10 eine größere Konizität. Diese Konizitätsveränderung bewirkt, wie aus Figur 2 ersichtlich ist, dass während des Durchfahrens des Weges 40 das ringartige Bauteil sich umfangsmäßig zusammenzieht, wodurch auch der Außendurchmesser geringfügig kleiner wird. Dieses Zusammenziehen bewirkt eine Verengung des Bereiches 18 bzw. des Trennschlitzes 19. Durch die Verringerung des umfangsmäßigen Abstandes zwischen den an den Trennschlitzen 19 angrenzenden Hebelelementen 9 kann die Freilaufeinrichtung 21 wirksam werden, da nämlich die Profilierungen der zusammenwirkenden Verzahnungen und Gegenverzahnung 27 derart ausgestaltet sind, dass die von dem elastisch verformbaren Federbereich 23 getragene Verzahnung 25 über die Gegenverzahnung 27 gleiten kann, so dass zumindest ein Weitertransport in Umfangsrichtung der Verzahnung 25 um einen Verzahnungsschritt gegenüber der Gegenverzahnung 27 erfolgt. Eine Verstellung im Bereich der Freilaufeinrichtung 20 kann beim Durchfahren des Weges 40 entgegen der Pfeilrichtung 32 nicht erfolgen, da hierbei die Verzahnung 24 und Gegenverzahnung 26 in Sperrrichtung gegeneinander verspannt sind.

In Figur 3 ist der Zustand der Freilaufeinrichtung 21 dargestellt, der beim Erreichen der rechten Endposition des Weges 40 von dieser eingenommen wird. In Figur 2 ist also eine Zwischenposition, die innerhalb dieses Weges 40 vorhanden ist, dargestellt.

Aus Figur 3 ist erkennbar, dass, sobald die Relativverdrehung zwischen der Verzahnung 25 und der Gegenverzahnung 27 ausreichend groß ist, die Verzahnung 25 infolge der Eigenelastizität des federnden Bereiches 23 wieder voll in Eingriff kommen mit der Gegenverzahnung 27. Aus Figur 3 ist auch zu entnehmen, dass der Trennschlitz 19 im radial äußeren Bereich geschlossen sein kann, so dass eine Berührung zwischen den benachbarten Hebelelementen 9 stattfinden kann.

Aus den Figuren 2 und 3 ist weiterhin zu entnehmen, dass beim Durchfahren des Weges 40 auch die in Zusammenhang mit Figur 1 beschriebenen Anschläge 17 zwischen den einzelnen Hebelelementen 9 wirksam werden. Diese Anschläge ermöglichen ein breiter werden der zwischen den Hebelelementen 9 vorgesehenen Schlitze 15, verhindern jedoch ein unbegrenztes Verbreitern dieser Schlitze 15. Die Anschläge 17 gewährleisten, dass bei einer Konizitätsvergrößerung des ringartigen Bauteils 10 sich die radial inneren Bereiche der Hebelelemente 9 nicht unkontrolliert voneinander beabstanden können. Dadurch wird auch gewährleistet, dass eine definierte Verschwenkbewegung des ringartigen Bauteils 10 um die Verschwenklagerung 12 erfolgt.

Der Trennschlitz 19 sollte derart ausgebildet sein, dass diejenigen Bereiche der diesen Trennschlitz 19 begrenzenden Abschnitte der Hebelelemente 9, welche sich am weitesten annähern, in der in Figur 1 und 1b dargestellten Position des ringartigen Bauteils 10 einen Abstand 41 aufweisen, der zumindest einer Teilung, also dem Abstand zwischen zwei aufeinander folgenden Zähnen der Gegenverzahnungen 26, 27, entspricht. Diese Bemessung ist erforderlich, um ein Überspringen der Zähne 25 gegenüber den Gegenzähnen 27 während eines Nachstellzyklus zu gewährleisten.

Sobald, wie in Figur 3 dargestellt, die Zähne 25 wieder in Eingriff gelangen mit den Gegenzähnen 27, wird durch die entsprechende Freilaufeinrichtung 21 gewährleistet, dass ein Zurückfedern bzw. Aufweiten des ringartigen Bauteils 10 infolge einer umfangsmäßigen Verschiebung der Zähne 25 verhindert wird.

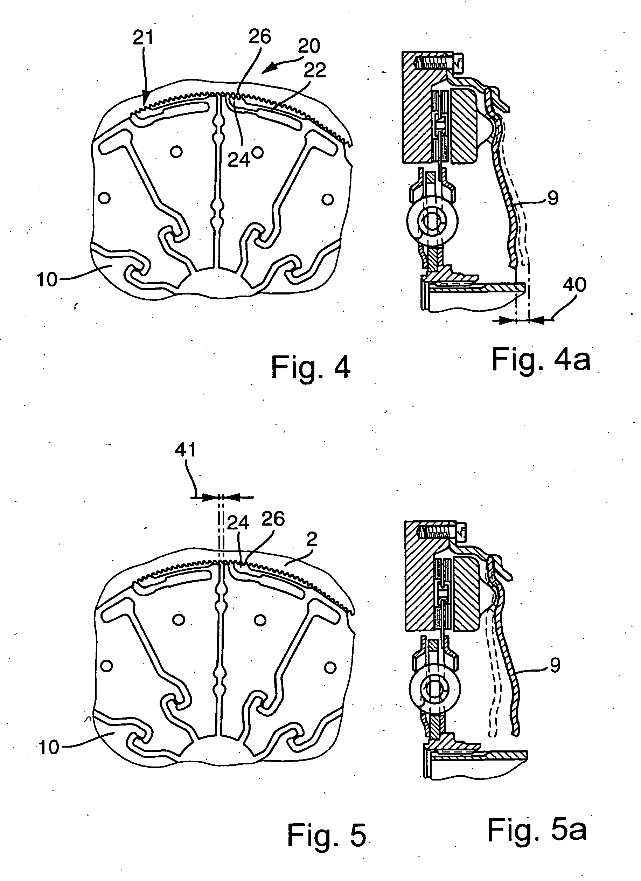

Um den Nachstellzyklus der Nachstelleinrichtung 30 zu beenden, werden die Hebelelemente 9 aus der in Figur 3a dargestellten Position nach links zurückverschwenkt, und zwar um einen Betrag, der dem Weg 40 oder zumindest annähernd diesem Weg 40 entspricht. Dadurch werden die Hebel 9 wiederum in eine winkelmäßige Lage gebracht, die zumindest annähernd der in Figur 1a voll ausgezogenen Position der Hebelelemente 9 entspricht. Diese Position der Hebelelemente 9 ist auch in Figur 4a voll ausgezogen dargestellt. Die in Figur 4a punktiert dargestellte Position der Hebelelemente entspricht derjenigen gemäß Figur 3a.

Wie aus Figur 4 ersichtlich ist, weitet sich das ringartige Bauteil 10 über den Verschwenkweg 40 wiederum auf, was sich in einer Durchmesservergrößerung des ringartigen Bauteils 10 auswirkt. Da, wie bereits in Zusammenhang mit Figur 3 erwähnt wurde, die Freilaufeinrichtung 21 in Umfangsrichtung entgegen dem Uhrzeigersinn eine Sperrwirkung aufweist, bewirkt die Aufweitung des ringartigen Bauteils 10 eine Nachstellung der Freilaufeinrichtung 20 im Uhrzeigersinn. Ähnlich wie dies in Zusammenhang mit der Freilaufeinrichtung 21 beschrieben wurde, werden nun auch die Zähne 24 entgegen der Wirkung des elastischen Federbereiches 22 radial nach innen gedrängt, so dass sie über Zähne der Gegenverzahnung 26 gleiten können. Sobald die Aufweitung des ringartigen Bauteils 10 ausreichend groß ist, kommen die Zähne 24 wieder in Volleingriff mit den Gegenzähnen 26, was in Figur 5 dargestellt ist.

Ein Vergleich zwischen den Figuren 1 und 5 zeigt, dass durch den beschriebenen Nachstellzyklus eine Verdrehung zwischen dem ringartigen Bauteil 10 und dem Kupplungsgehäuse 2 entsprechend einer Zahnteilung erfolgt ist.

Durch entsprechend feine Aufteilung der in Eingriff stehenden Verzahnungen und Bemessung des für einen Nachstellzyklus vorgesehenen Verschwenkwinkels der Hebelelemente 9 kann auch eine Verdrehung zwischen den entsprechenden Bauteilen erfolgen, bei der mehr als eine Zahnteilung nachgestellt wird.

Auch können mehrere, z. B. zwei, entsprechend ausgebildete Nachstelleinrichtungen 30 Verwendung finden, die beispielsweise um eine halbe Zahnteilung versetzt wirksam sind, wodurch eine feinere Nachstellung ermöglicht werden kann.

Bei dem beschriebenen Ausführungsbeispiel erfolgt die Begrenzung der Aufweitung des ringartigen Bauteils 10 durch radiale Anlage von äußeren Bereichen 42, 43 an radialen Abstützbereichen 44, 45, welche bei dem dargestellten Ausführungsbeispiel durch das Gehäuse 4 gebildet sind. Die Abstützbereiche 45 sind hier unmittelbar durch die Spitzen von Zähnen des Verzahnungssegmentes 29 gebildet. Die Bereiche 42, 43 sind bei dem beschriebenen Ausführungsbeispiel durch Verbindungsstege gebildet, die jeweils zwei benachbarte Hebelelement 9 miteinander verbinden. Die Verbindungsstege 42, 43 besitzen eine gewisse Elastizität, die eine Relativbewegung zwischen den einzelnen Hebelelementen 9 ermöglichen. Zusätzlich oder alternativ zu den eine Aufweitung des ringartigen Bauteils 10 verhindernden Bereichen 42, 43, 44, 45 kann zumindest auch im Bereich des Trennschlitzes 19 ein Anschlag zwischen den diesen Trennschlitz 19 begrenzenden Hebelelementen 9 vorgesehen werden. Ein solcher Anschlag begrenzt also die Aufweitung des Trennschlitzes 19 zumindest im radial äußeren Bereich. Ein derartiger Anschlag kann ähnlich ausgebildet sein wie die Anschläge 17. Hierfür muss der Trennschlitz 19 entsprechend ausgestaltet werden. Die Begrenzung der Aufweitung des Trennschlitzes 19 kann jedoch auch durch ein zusätzliches Bauteil und/oder Anschläge an angrenzenden Bauteilen begrenzt werden.

Bei dem dargestellten Ausführungsbeispiel ist die Abstützung zwischen Kupplungsgehäuse 4 und ringartigem Bauteil 10 im Bereich der Schwenklagerung 12 derart ausgestaltet, dass beim Verdrehen des ringartigen Bauteils 10 gegenüber dem Gehäuse 4 zumindest der äußere Rand dieses Bauteils 10 eine wenigstens annähernd gleich bleibende axiale Höhe beibehält, wodurch auch die Betätigungswege für das Betätigungselement 31 zumindest im Wesentlichen konstant gehalten werden können.

Wie bereits erwähnt, ist bei dem dargestellten Ausführungsbeispiel das ringartige Bauteil 10 einstückig ausgebildet, wobei die zwischen den einzelnen Hebelelementen 9 verbleibenden Verbindungsbereiche 42, 43 derart bemessen und ausgestaltet sind, dass das ringartige Bauteil 10 ähnlich wie eine Membran- bzw. Tellerfeder eine gewisse Eigenelastizität aufweist, die eine federnde, konische Verformung des ringartigen Bauteils 10 bzw. der Hebelelemente 9 gewährleistet.

Das als Hebelfeder" ausgebildete ringartige Bauteil 10 ist vorzugsweise derart ausgelegt, dass dieses in seiner kraftlosen Ruheposition eine kegelstumpfförmige Form besitzt, bei der die Anschläge 17 gerade wirksam sein können oder gar mit einer gewissen Vorspannung aneinander anliegen können. Die kegelstumpfförmige Aufstellung des ringartigen Bauteils 10 kann also durch Eigenfederung gewährleistet werden. Die für die Nachstellung erforderliche, kegelstumpfförmige Aufstellung des ringartigen Bauteils 10 kann jedoch auch durch zusätzliche oder ausschließlich durch andere Bauteile erzeugt werden. So kann beispielsweise aufgrund einer axialen Vorspannung von die Drehmomentübertragung zwischen dem Gehäuse 4 und der Anpressplatte 5 gewährleistenden Blattfederelementen das ringartige Bauteil 10 über die Anpressplatte 5 in die z. B. in Figur 2a dargestellte, kegelstumpfförmige Stellung gedrängt werden. Auch kann das Betätigungselement 31 mit den Zungenspitzen der Hebelelemente 9 in beide axiale Richtungen eine Koppelung aufweisen, so dass auch eine zwangsweise kegelstumpfförmige Aufstellung des ringartigen Bauteils 10 mittels des Betätigungselementes 31 erfolgen könnte.

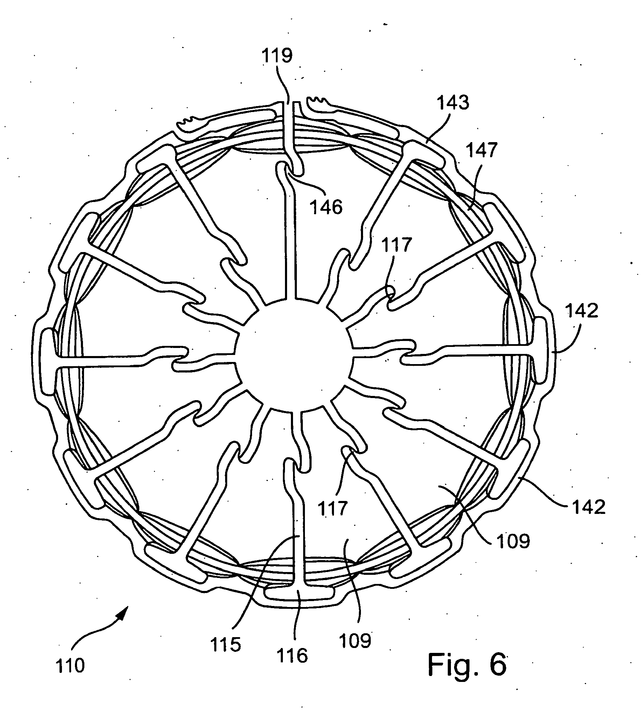

In Figur 6 ist in Draufsicht und in ihrer kraftlosen Ruheposition ein ringartiges Bauteil 110 dargestellt, welches als Hebelfeder ausgebildet ist. Die Hebelfeder 110 besitzt einzelne Hebelelemente 109, die ähnlich angeordnet und untereinander über Verbindungsstege 142, 143 miteinander verbunden sind, wie dies in Zusammenhang mit dem ringartigen Bauteil 10 beschrieben wurde. Zwischen den einzelnen Hebelelementen 110 sind wiederum im Wesentlichen radial verlaufende Schlitze 115 vorgesehen, die radial außen in sich hier in beide Umfangsrichtungen erstreckende Erweiterungen 116 einmünden.

Die Führung der Schlitze 115 ist wiederum derart ausgestaltet, dass diese in Umfangsrichtung zwischen den einzelnen Hebelelementen 109 wirksame Anschläge 117 bilden.

Im Bereich des eine Aufweitung und ein Zusammenziehen der Hebelfeder 110 ermöglichenden Schlitzes 119 ist ebenfalls ein Anschlag 146 vorgesehen, welcher die Aufweitung des Schlitzes 119 begrenzt. Der Anschlag 146 ist ähnlich wie die Anschläge 117 durch entsprechende Ausgestaltung der Führung des Schlitzes 119 gebildet.

Aus Figur 6 ist weiterhin erkennbar, dass in den einzelnen Hebelelementen 109 Anprägungen 147 eingebracht wurden. Diese axial in die Hebelelemente 109 eingebrachten Anprägungen 147 bilden in Umfangsrichtung verlaufende, sich jedoch axial erhebende Rampen, die, wie bereits erwähnt, mit von einer Anpressplatte 5 getragenen Gegenrampen zusammenwirken können. Durch Verdrehung der Hebelfeder 110 kann somit eine axiale Verlagerung, z. B. der Anpressplatte 5, gegenüber dem Kupplungsgehäuse 2 erfolgen. Durch diese axiale Verlagerung der Anpressplatte 5 kann ein an den Reibbelägen 6a der Kupplungsscheibe 6 auftretender Verschleiß zumindest teilweise kompensiert werden. Bei voller Kompensation des entstehenden Verschleißes behält die Hebelfeder 110 innerhalb der dieser zugeordneten Reibungskupplung eine zumindest annähernd konstante Lage bei geschlossener Reibungskupplung bzw. einen zumindest konstanten Betätigungsweg

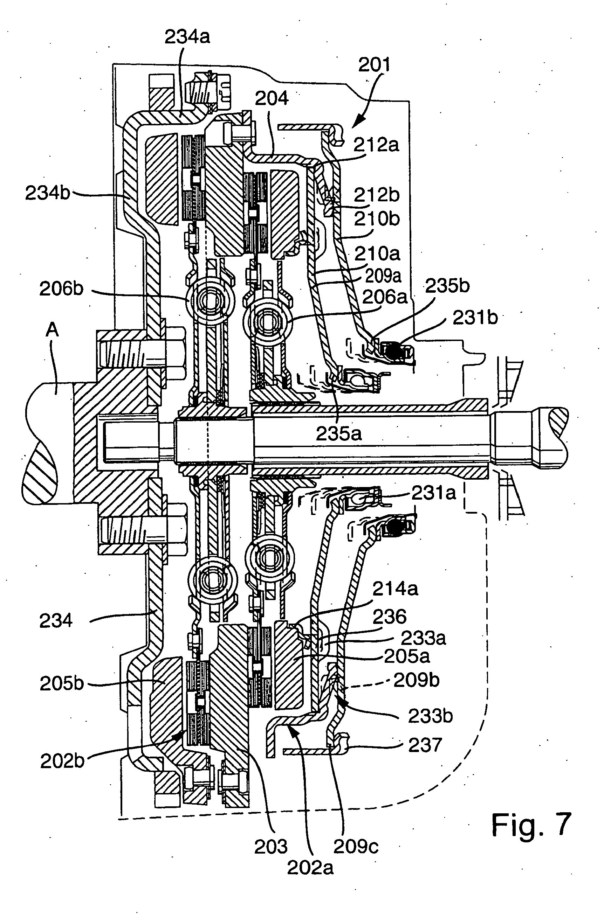

In Figur 7 ist ein Kupplungsaggregat 201 dargestellt, bei dem die erfindungsgemäße Verschleißausgleichsvorrichtung mittels eines ringartigen Bauteils Verwendung findet.

Das Kupplungsaggregat 201 umfasst zwei Reibungskupplungen 202a und 202b, von denen wenigstens eine eine erfindungsgemäß ausgestaltete Verschleißausgleichsvorrichtung 233a, 233b aufweist.

Bei dem dargestellten Ausführungsbeispiel besitzen die beiden Reibungskupplungen 202a und 202b eine gemeinsame Gegendruckplatte 203, die über eine tellerförmige Verbindungsscheibe 234 mit der Abtriebswelle A eines Motors verbunden ist. Mit dem radial äußeren, axial sich erstreckenden Bereich 234a der Platte 234 ist die Gegendruckplatte 203 fest verbunden. Hierfür besitzt die Gegendruckplatte 203 über ihren Umfang betrachtet mehrere radial vorstehende Bereiche die mit der Trägerplatte 234 verbunden, zum Beispiel verschraubt, sind.

Die Gegendruckplatte 203 ist beidseits von den Reibbelägen jeweils einer Kupplungsscheibe 206a, 206b flankiert. Die Gegendruckplatte 203 trägt auf ihrer der Motorabtriebswelle A abgekehrten Seite ein Kupplungsgehäuse 204. Auf der gleichen axialen Seite der Gegendruckplatte 203 ist weiterhin eine Anpressplatte 205a vorgesehen, mittels derer die Reibbeläge der Kupplungsscheibe 206a axial einspannbar sind. Zwischen der Anpressplatte 205a und dem Gehäuse 204 ist ein erfindungsgemäß ausgestaltetes, ringartiges Bauteil 210a vorgesehen, welches als Hebelfeder ausgebildet sein kann und ähnlich angeordnet und wirksam ist, wie das in Zusammenhang mit den vorhergehenden Figuren beschriebene, ringartige Bauteil 10 bzw. 110.

Die radial inneren Zungenbereiche 235a der Hebelelemente 209a sind über ein Betätigungslager 231 a axial verlagerbar, wodurch diese Hebelelemente 209a um die Verschwenklagerung 212a als einarmiger Hebel verschwenkt werden.

Die Abstützung des ringartigen Bauteils 210a an der Anpressplatte 205a erfolgt bei dem hier dargestellten Ausführungsbeispiel über einen Zwischenring 214a aus Blech. Dieser Zwischenring 214a bildet in Umfangsrichtung sich erstreckende, in axialer Richtung jedoch ansteigende Rampen, die mit entsprechend ausgebildeten Gegenrampen, welche von den Hebelelementen 209a getragen sind, zusammenwirken. Der Durchmesserbereich, auf dem diese Rampen und Gegenrampen vorgesehen sind, ist mit 236 gekennzeichnet. Bei der Reibungskupplung 202a handelt es sich um eine so genannte zugedrückte Reibungskupplung, bei der der überwiegende Anteil der zur Drehmomentübertragung erforderlichen Anpresskraft von außen in diese eingeleitet wird, und zwar hier über das Betätigungslager 231 a. Hierfür wird das Betätigungstager 231 a nach links bewegt, wodurch eine Verschwenkung der Hebelelemente 209a um den Bereich 212a erfolgt, welche eine entsprechende Verlagerung der Anpressplatte 205a erzeugt. Durch diese Verlagerung werden die Reibbeläge der Kupplungsscheibe 206a zwischen den beiden Platten 203 und 205a eingespannt.

Die Reibungskupplung 202b besitzt ebenfalls eine gegenüber der Gegendruckplatte 203 drehfeste, jedoch axial begrenzt verlagerbare Anpressplatte 205b. Diese Anpressplatte 205b ist axial zwischen der Gegendruckplatte 203 und den radialen Bereichen 234b der Antriebsplatte 234 angeordnet. Durch entsprechende axiale Verlagerung der Anpressplatte 205b können die Reibbeläge der Kupplungsscheibe 206b axial zwischen dieser Anpressplatte 205b und der Gegendruckplatte 203 eingespannt werden.

Die axiale Verlagerung der Anpressplatte 205b erfolgt mittels eines ringartigen Bauteils 210b, das ebenfalls als Hebelfeder ausgebildet sein kann. Das ringartige Bauteil 210b ist kippbar bzw. verschwenkbar auf dem Kupplungsgehäuse 204 abgestützt. Hierfür besitzt das Kupplungsgehäuse 204 auf der dem ringartigen Bauteil 210a abgekehrten Seite einen ringartigen Abstützbereich 212b, der eine ringartige Verschwenkzone bildet. Die Hebelelemente 209b des ringartigen Bauteils 210b sind um diese Verschwenkzone 212b nach Art eines zweiarmigen Hebels kippbar. Die Verschwenkzone 212b hat bei dem dargestellten Ausführungsbeispiel einen kleineren Durchmesser als die Verschwenklagerung 212a. Die radial inneren Zungenbereiche 235b der Hebelelemente 209b sind ebenfalls über ein Betätigungselement 231 b axial verlagerbar. Die radial äußeren Bereiche 209c der Hebelelemente 209b stützen sich an einem Abstützelement bzw. Verbindungselement 237 ab, welches über den Umfang betrachtet nicht näher dargestellte, axiale Ansätze aufweist, die fest mit der Anpressplatte 205b verbunden sind. Beim Verschwenken der Hebelelemente 209b um die ringförmige Zone 212b wird das Verbindungselement 237 axial verlagert. Diese Verlagerung ermöglicht die Betätigung der Reibungskupplung 202b durch eine entsprechende Verlagerung der Anpressplatte 205b. Im Bereich der Verschwenkzone 212b ist zwischen dem Gehäuse 204 und dem ringartigen Bauteil 210b eine Rampenanordnung vorgesehen, welche gewährleistet, dass bei einer Relativverdrehung zwischen den beiden Bauteilen 204 und 21 Ob zumindest der Verschleiß, der an den Reibbelägen der Kupplungsscheibe 206b entsteht, kompensiert wird. Zwischen den radial äußeren Bereichen 209c des ringartigen Bauteils 210b und dem Verbindungselement 237 kann wiederum eine erfindungsgemäße Verdreheinrichtung vorgesehen sein.

Die Anpressplatten 205a und 205b sind in an sich bekannter Weise mit der Gegendruckplatte 203 über tangential bzw. in Umfangsrichtung sich erstreckende Blattfederelemente verbunden.

Das in der Figur 7 dargestellte Kupplungsaggregat 201 kann beispielsweise in Zusammenhang mit einem so genannten Lastschaltgetriebe Verwendung finden. Derartige Lastschaltgetriebe sind beispielsweise in den EP 1342935 A2, EP 1271007 A2, WO 01/77540 A2, DE 101 55 458 A1, sowie in dem darin angeführten Stand der Technik beschrieben.

Bei den mit einer erfindungsgemäßen Verschleißausgleichsvorrichtung versehenen Reibungskupplungen erfolgt also eine gezielte Verschleißnachstellung durch Betätigung des ringartigen Bauteils bzw. der durch dieses gebildeten Hebelfeder. Hierfür wird das ringartige Bauteil entgegen der Schließrichtung aufgestellt. Diese Aufstellung kann durch Eigenfedereigenschaften des ringartigen Bauteils erzielt werden und/oder durch eine gezielte Betätigung mittels eines Ausrücksystems. Hierfür kann das Ausrücksystem einen "Ausrücküberweg" fahren.

Bei Ausgestaltung eines ringartigen Bauteils als Hebelfeder kann dieses ähnlich wie eine Tellerfeder durch Stanzen hergestellt werden, wobei einzelne Konturen, wie zum Beispiel die zur Bildung der Anschläge 17, 117, 146 notwendigen Konturen, lediglich durch einen Trennschnitt gebildet werden können. Alternativ können zumindest diese Konturen auch durch Laserschneiden gebildet werden.

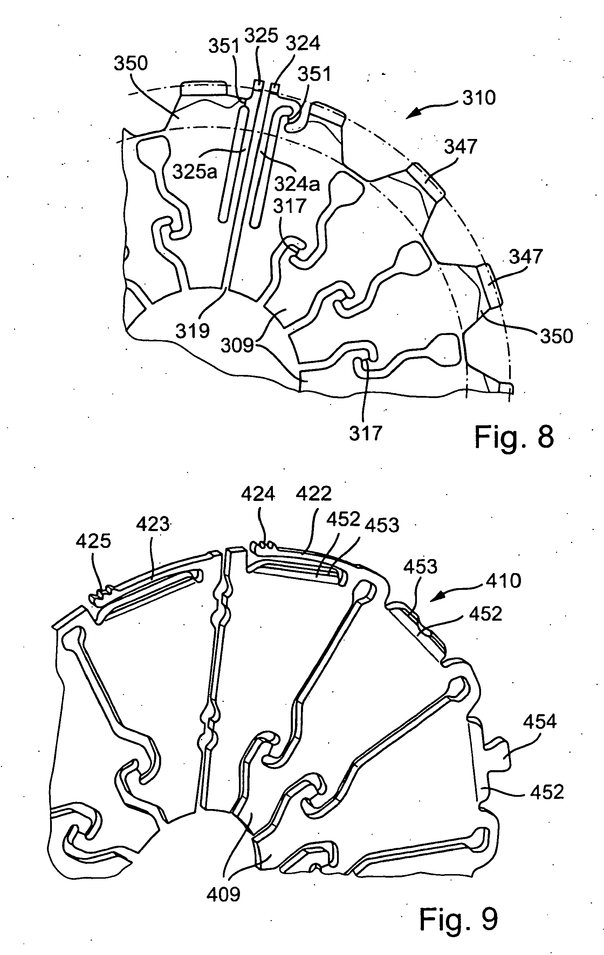

Die Hebelfeder 310 gemäß Figur 8 besteht aus einer Vielzahl von in ringartiger Anordnung angeordneten Hebelelementen 309. Über den Umfang betrachtet weist die Hebelfeder 310 einen Spalt bzw. durchgehenden Schlitz 319 auf, welcher die gleiche Funktion wie der in Figur 1 dargestellte Schlitz 19 hat. Die Hebelfeder 310 besitzt radial außen eine Mehrzahl von in ringartiger Anordnung vorgesehenen Armen bzw. Vorsprüngen 350, welche radial außen in Umfangsrichtung verlaufende, jedoch sich in axialer Richtung erhebende Rampen 347 besitzen. Diese Rampen 347 können, wie dies in Zusammenhang mit der Beschreibung der Figuren 1a bis 5a erläutert wurde, mit an einem Kupplungsgehäuse oder an einer Anpressplatte vorgesehenen Gegenrampen zusammenwirken, so dass bei entsprechender Relativverdrehung zwischen den Rampen und Gegenrampen eine axiale Verlagerung wenigstens eines dieser Bauteile erfolgen kann. Die Hebelfeder 310 besitzt eine radiale Anordnung der für den umfangsmäßigen Vortrieb notwendigen Sperrzähne 324, 325. Die Sperrzähne 324, 325 sind von axial federnden, radialen Hebelbereichen 324a, 325a getragen. Die Sperrzähne 324, 325 sind in axialer Richtung betrachtet derart profiliert, dass sie beim Zusammenwirken mit entsprechenden Gegenprofilierungen ähnlich wirken, wie die Verzahnungen 24, 25 gemäß Figur 1b. Die Sperrzähne 324, 325 sollen also in eine Drehrichtung eine Sperrwirkung erzeugen, wohingegen sie in die andere Drehrichtung eine Verdrehung der Hebelfeder 310 gegenüber dem Blauteil, an dem sich diese abstützt, ermöglichen sollen.

Die federnden Hebelbereiche 324a, 325a sind vorzugsweise derart ausgebildet, dass im eingebauten Zustand der Hebelfeder 310 diese federnd axial vorgespannt sind, so dass sie mit einer beispielsweise an einem Kupplungsgehäuse vorgesehenen Gegenprofilierung in Eingriff stehen. Die Gegenprofilierung kann zum Beispiel durch eine an einem Kupplungsgehäuse vorgesehene, sich zumindest segmentartig erstreckende Stirnverzahnung gebildet sein. Zur Bildung der Sperrkonturen können die Sperrzähne 324, 325 angeprägt, verschränkt oder eingeschnitten sein. Um ein seitliches Ausknicken der Hebelbereiche 324a, 325a zu vermeiden, können Anschlagbereiche 351 vorgesehen werden. Zwischen den Hebelelementen 309 sind ebenfalls Anschläge 317 vorgesehen, die ähnlich wirksam sind wie die Anschläge 17 bzw. 117.

Die in Figur 9 dargestellte Hebelfeder 410 ist ähnlich ausgebildet, wie die in Zusammenhang mit den Figuren 1 bis 6 beschriebenen Hebelfedern 10 bzw. 110. Die Hebelfeder 410 unterscheidet sich im Wesentlichen dadurch, dass diese am radial äußeren Rand abgewinkelte Bereiche 452 besitzt, die gegenüber zumindest den angrenzenden Abschnitten der Hebelelemente 409 axial hervorstehen. Bei dem dargestellten Ausführungsbeispiel sind auch radial innerhalb der elastischen Bereiche 422, 423, welche Verzahnungen 424, 425 tragen, derartige abgewinkelte Bereiche 452 vorgesehen. Die radial vorstehenden, in Achsrichtung abgewinkelten Bereiche 452 besitzen vorzugsweise eine geringe Anformung bzw. Abrundung 453, die sich in Umfangsrichtung erstreckt. Diese Anformungen 453 bilden einen ringförmigen Abstützbereich, über den sich die Hebelfeder 410, zum Beispiel an einem Kupplungsdeckel, verschwenkbar abstützen kann. Durch eine derartige Ausgestaltung kann gewährleistet werden, dass zwischen dem entsprechenden Kupplungsgehäuse und den Hebelelementen 409 ein ausreichend großer Abstand vorhanden ist, um ein ungehindertes Verschwenken der Hebelfeder 410 um die Anformungen 453 gewährleisten zu können. Durch entsprechende Ausgestaltung der an den abgewinkelten Bereichen 452 angebrachten Anformungen 453 kann auch gewährleistet werden, dass zwischen der Hebelfeder 410 und den Abwälzbereichen, zum Beispiel am Kupplungsgehäuse, praktisch eine Linienberührung vorhanden ist.

Zweckmäßig kann es sein, wenn zumindest einzelne abgewinkelte Bereiche 452 radial außen einen Zentrierfortsatz 454 angeformt haben. Zweckmäßig ist es dabei, wenn zumindest drei derartige Zentrierfortsätze 454 über den Umfang der Hebelfeder 410 verteilt angeordnet sind.

Die abgewinkelten Bereiche 452 können eine Abstützkante bilden, die eine bogenartige Gestalt aufweist. Zweckmäßig kann es jedoch auch sein, wenn die Bereiche 452 eine Anformung 453 besitzen, die jeweils eine gerade Auflagekante bildet. Bei axialer Abstützung der Drehtellerfeder bzw. Hebelfeder 410 über die scharfkantig oder abgerundet ausgebildeten Anformungen, zum Beispiel an einem Kupplungsdeckel, entsteht eine Linienberührung unabhängig von der Stellung der Tellerfederzungen bzw. den Hebelelementen 609.

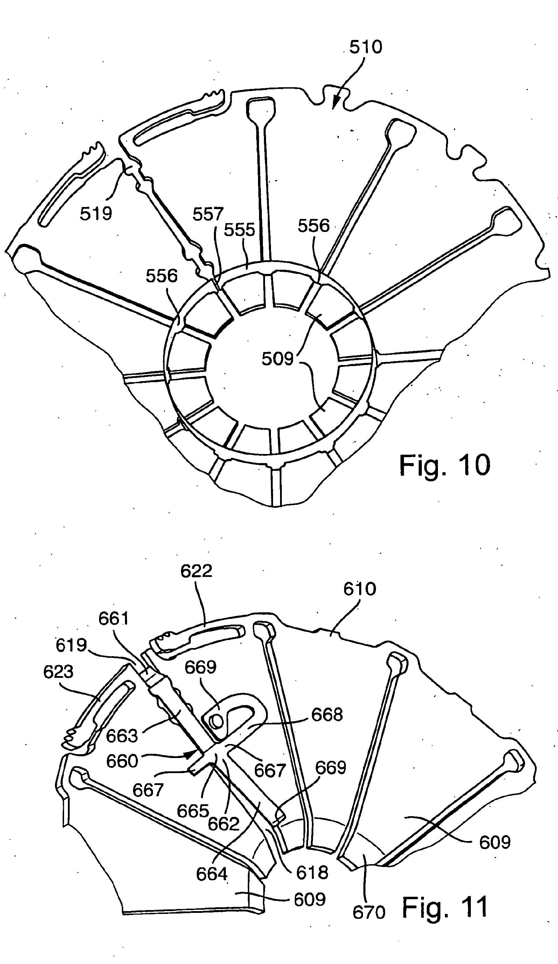

Die in Figur 10 dargestellte Hebelfeder 510 besitzt einen vergleichbaren Aufbau und eine vergleichbare Funktionsweise wie die bereits beschriebenen Hebelfedern.

Der wesentliche Unterschied besteht hauptsächlich darin, dass anstatt der in Zusammenhang mit den bisherigen Figuren beschriebenen Anschläge 17, 117, 317, welche einstückig mit der entsprechenden Hebelfeder ausgebildet sind, nun ein zusätzliches Element verwendet wird, das gewährleistet, dass bei einer Konizitätsveränderung der Hebelfeder 510 zum Zwecke einer Nachstellung die umfangsmäßigen Relativbewegungen zwischen den Hebelelementen 509 begrenzt werden.

Bei der Hebeltellerfeder 510 wird hierfür ein ringförmiges Zusatzelement 555 verwendet, das im radial inneren Bereich der Hebelelemente 509 aufgesetzt ist. Das aus einem Blechstreifen hergestellte, ringförmige Element 555 besitzt hierfür axiale Ansätze 556, welche zwischen die Hebelelemente 509 eingreifen. Über diese axialen Ansätze 556 kann gleichzeitig das ringförmige Element 555 axial auf der Hebelfeder 510 fixiert werden. Dies kann beispielsweise über eine Schnappverbindung erfolgen. Hierfür können wenigstens einzelne Ansätze 556 Bereiche besitzen, welche die benachbarten Hebelelemente 509 hintergreifen.

Das ringförmige Element 555 besitzt im Bereich des durchgehenden Schlitzes 519 ebenfalls einen Schlitz 557, der eine Durchmesserveränderung des ringförmigen Elementes 555 ermöglicht. Während einer Betätigung der Hebelfeder 510 im Nachstellbereich, welcher in den Figuren 1 a bis 5a mit dem Bezugszeichen 40 gekennzeichnet ist, bewegt sich das ringförmige Element 525 mit den Hebelelementen 509 auf einen größeren Durchmesser und begrenzt dabei den umfangsmäßigen Abstand zwischen den radial inneren Bereichen der Hebelelemente 509 auf einen im Wesentlichen konstanten Wert.

Die in Figur 11 dargestellte Hebelfeder 610 besteht ebenfalls aus einer Mehrzahl von in ringartiger Anordnung vorgesehenen Hebelelementen 609. Die Hebelfeder 610 kann in ähnlicher Weise wie dies in Zusammenhang mit den übrigen Hebelfedern beschrieben wurde, in einer Reibungskupplung verwendet werden. Die Hebelfeder 610 besitzt wiederum einen ein Aufweiten und Zusammenziehen der ringartigen Hebelfeder 610 ermöglichenden Bereich 618, der hier ebenfalls durch einen Trennschlitz 619 gebildet ist. Die diesem Trennschlitz bzw. Spalt 619 benachbarten Hebelelemente 609 sind in ähnlicher Weise wie dies in Zusammenlang mit den anderen, ringartigen Bauteilen bzw. Hebelfedern beschrieben wurde, mit Elementen 622, 623 einer Sperr- bzw. Freilaufeinrichtung versehen. Die Wirkungsweise und Ausgestaltungsmöglichkeiten derartiger Elemente wurden bereits in Zusammenhang mit den übrigen Figuren beschrieben.

Die Hebelfeder 610 unterscheidet sich gegenüber den bereits beschriebenen insbesondere dadurch, dass auf dieser eine Sperreinrichtung 660 vorgesehen ist. Durch diese Sperreinrichtung 660 soll verhindert werden, dass sich der Schlitz bzw. Spalt 619 unkontrolliert schließt.

Die Hebeltellerfeder 610 ist derart ausgestaltet, dass im verspannungsfreien Zustand, also in Ruhelage der Hebeltellerfeder 610, diese die Tendenz hat sich zusammenzuziehen und den Spalt 619 zu schließen. Dadurch kommen die dem Spalt 619 benachbarten Bereiche der angrenzenden Hebelelemente 609 zumindest im radial äußeren Bereich in Anlage.

Das Schließen des Spaltes 619 wird verhindert durch einen Bereich 661 der Sperreinrichtung 660, welcher axial in den Spalt 619 eingreift.

Bei dem dargestellten Ausführungsbeispiel besitzt die Sperreinrichtung 660 ein federndes Bauteil 662, das einen nach radial außen und einen nach radial innen verlaufenden Hebelarm 663, 664 besitzt. Bei dem dargestellten Ausführungsbeispiel sind diese Hebelarme 663, 664 in etwa gleich lang. Der radial äußere Hebelarm 663 trägt radial außen den Sperrbereich 661, welcher in den Spalt 619 eingreift. Im Übergangsbereich zwischen den beiden Hebelarmen 663, 664 ist das Bauteil 662 federnd verschwenkbar gehaltert. Hierfür stützt sich das Bauteil 662 - in Umfangsrichtung betrachtet - beidseits des Übergangsbereiches 665 zwischen den Hebelarmen 663, 664 an den angrenzenden Hebelelemente 609 ab. Von den hierfür beidseits des Übergangsbereiches 665 vorgesehenen Auslegern 666, 667 ist wenigstens einer als Federbereich 668 ausgebildet. Bei dem dargestellten Ausführungsbeispiel ist dieser Federbereich 668 haarnadelähnlich ausgebildet, wobei das freie Ende 669 mit einem Hebelelement 609 verbunden ist, zum Beispiel durch Vernieten. Der Federbereich 668 ermöglicht im Übergangsbereich 665 ein federndes Verkippen des Bauteils 662.

Wie aus Figur 11 ersichtlich ist, ist der radial nach innen verlaufende Arm 664 gegenüber den Hebelelementen 609 axial aufgestellt.

Die Funktions- bzw. Wirkungsweise der Sperreinrichtung 660 wird im Folgenden kurz erläutert:

Sobald eine entsprechend ausgebildete Steuereinrichtung die Notwendigkeit einer Verschleißnachstellung feststellt, wird die Hebelfeder 610 über den normalen Öffnungsweg hinaus verschwenkt. Dies würde insbesondere in Zusammenhang mit den Figuren 1 bis 5 sowie 1 a bis 5a näher erläutert. Die Hebelfeder 610 wird also in einen Nachstellbereich verschwenkt, welcher dem in den Figuren 1a bis 5a mit dem Bezugszeichen 40 gekennzeichneten Bereich entsprechen kann. Eine derartige Nachstellbetätigung kann in besonders vorteilhafter Weise bei stillstehendem Motor erfolgen, da dann keine Fliehkräfte auf die Bauteile, insbesondere auf die Hebelfeder, wirken. Während einer derartigen Betätigung bzw. Verschwenkung der Hebelelemente 609 kommt der radial innere Bereich 669 des Hebelarms 664 an einem axial festen Anschlag zur Anlage. Dieser Anschlag kann beispielsweise am Kupplungsgehäuse oder an einem mit dem Getriebe axial festen Bauteil vorgesehen sein. Aufgrund dieser axialen Abstützung des Bereiches 669 und der weiterhin stattfindenden Verschwenkung der Hebelelemente 609 wird das Bauteil 662 um den Bereich 665 nach Art eines zweiarmigen Hebels verkippt bzw. verschwenkt, und zwar derart, dass der Bereich 661 des Hebelarmes 663 aus dem Spalt 619 gezogen bzw. gedrängt wird. Dadurch wird der Hebelfeder 610 ermöglicht sich zusammenzuziehen, wodurch eine Verdrehung bzw. Nachstellung der Hebelfeder 610 eingeleitet wird. Wie bereits erwähnt, kann das Zusammenziehen der Hebelfeder 610 durch eine entsprechende, federnde Ausgestaltung dieser Hebelfeder 610 bewirkt werden. Beim rückwärts Durchfahren des Nachstellbereiches wird der Hebelarm 664 wiederum allmählich entlastet, so dass der Hebelarm 663 zurückverschwenkt wird. Dabei kann sich dieser über den Bereich 661 an den benachbarten Hebelelementen 609 abstützen. Diese Abstützung kann so lange erfolgen, bis durch Verringerung der Konizität der Hebeltellerfeder 610 und der dadurch erfolgenden Aufweitung dieser Hebelfeder 610 der Spalt 619 eine ausreichende Breite aufweist, damit der Bereich 661 wiederum in den Spalt 619 einfedern kann. Zweckmäßig kann es sein, wenn zumindest der Bereich 661 und/oder die Kanten der angrenzenden Hebelelemente 609 Anformungen, wie zum Beispiel Abschrägungen besitzen, die ein Einfädeln des Bereiches 661 in den Spalt 619 erleichtern. Beim Durchfahren des Nachstellbereiches, der, wie bereits erwähnt, in den Figuren 1a bis 5a mit dem Bezugszeichen 40 gekennzeichnet ist, wirken die Elemente 622, 623 der Sperr- bzw. Freilaufeinrichtungen in ähnlicher Weise wie dies in Zusammenhang mit den übrigen Figuren beschrieben wurde.

Die in Figur 11 gezeigte Hebel- bzw. Drehtellerfeder 610 kann in vorteilhafter Weise eine Abkröpfung 670 im Bereich der freien Enden der Hebelelemente bzw. Betätigungszungen 609 aufweisen. Bei zugedrückten Kupplungen sind die Abkröpfungen 670 vorzugsweise derart ausgebildet, dass beim Zudrücken der Reibungskupplung durch das Betätigungslager eine radiale Kraft auf die Hebelelemente 609 ausgeübt wird, die ein Aufweiten der Hebelfeder 610 nach einem Nachstellvorgang unterstützt.

Während eines Nachstellvorganges befinden sich, wie bereits erwähnt, die Hebelelemente 609 außerhalb ihres normalen Betätigungs- bzw. Schwenkbereiches. Dabei kann es zweckmäßig sein, wenn ein Anschlag vorgesehen ist, zum Beispiel am Gehäuse oder aber auch getriebeseitig, an dem sich die Hebelelemente radial außerhalb der Abkröpfungen 670 abstützen können. Dadurch wird die Möglichkeit geschaffen, dass die radial inneren Bereiche der Hebelelemente bzw. Federzungen 609 vom Betätigungslager entlastet werden. Somit kann verhindert werden, dass das Betätigungslager das radiale Zusammenziehen der Hebelfeder 610 behindert. Beim Wiederschließen bzw. Zudrücken der Reibungskupplung schwenkt das Betätigungslager die Hebelelemente 609 in den normalen Arbeitsbereich und übt dabei über entsprechend angepasste schräge Bereiche der Abkröpfungen 670 eine Radialkraft auf die Hebelelemente 609 bzw. Hebelfeder 610 aus. Diese Radialkraft unterstützt, wie bereits erwähnt, das Aufweiten und Verdrehen der Hebelfeder 610.

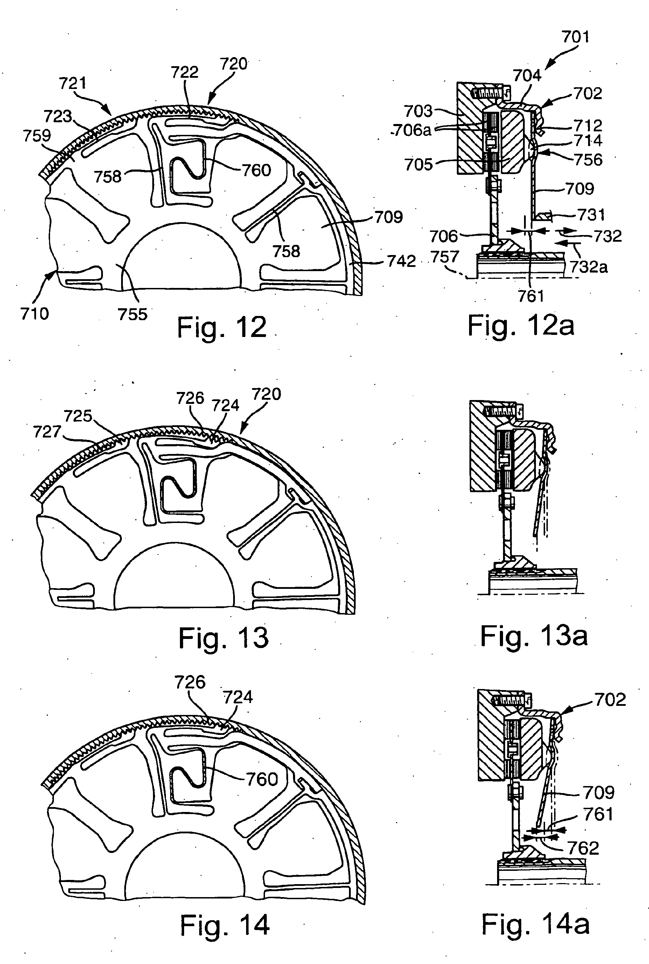

Das in den Figuren 12 bis 16a dargestellte Kupplungsaggregat 701 mit einer in verschiedenen Betätigungszuständen dargestellten Reibungskupplung 702 unterscheidet sich funktionell gegenüber dem in Zusammenhang mit den Figuren 1 bis 5a beschriebenen Kupplungsaggregat 1 hauptsächlich dadurch, dass die Nachstellung innerhalb der Reibungskupplung 702 durch einen über den normalen Einrückweg hinausgehenden Betätigungsweg der Hebelelemente 709 eingeleitet bzw. ausgelöst wird. Hierfür wird ein speziell ausgebildetes, ringartiges Bauteil 710, das eine Mehrzahl von ringartig angeordneten Hebelelementen 709 aufweist, verwendet. Bei dem dargestellten Ausführungsbeispiel sind die Hebelelemente 709 miteinander über einen ringförmigen Bereich 755 verbunden. Der ringförmige Bereich ist am radial inneren Ende der verhältnismäßig kurzen Hebelelemente 709 vorgesehen. Die als Zungen ausgebildeten Hebelelemente 709 gehen also radial innen in den ringförmigen Bereich 755 über, wobei in vorteilhafter Weise dieser ringförmige Bereich 755 tellerfederartig ausgebildet ist, so dass bei einer Verformung desselben eine Rückstellkraft auf die Hebelelemente 709 ausgeübt wird, welche in vorteilhafter Weise eine Verschwenkung dieser Hebelelemente 709 in Richtung des in Figur 12a dargestellten Pfeiles 732, also in Öffnungsrichtung der Reibungskupplung 702, bewirkt. Bei einer Ausgestaltung der Betätigungseinrichtung, welche auf den radial inneren, ringförmigen Abschnitt des ringförmigen Bereiches 755 zum Betätigen der Reibungskupplung 702 einwirkt, derart, dass diese auf die Hebelelemente 709 auch eine Betätigungskraft in Richtung des Pfeiles 732 auf die Hebelelemente 709 erzeugen kann, kann der ringförmige Bereich 755 derart ausgestaltet werden, dass dieser auf die Hebelelemente 709 eine Schwenkbewegung entgegen des Pfeiles 732 bewirkt.

Wie beispielsweise aus den Figuren 12 und 12a zu entnehmen ist, besitzt die Reibungskupplung 2 ein Gehäuse 704, das mit der als Schwungrad ausgebildeten Gegendruckplatte 703 fest verbunden ist. Die Anpressplatte 705 der Reibungskupplung 702 ist beispielsweise über Blattfedern mit dem Kupplungsgehäuse 704 drehfest, jedoch axial begrenzt verlagerbar verbunden. Zwischen der Anpressplatte 705 und der Gegendruckplatte 703 sind die Reibbeläge 706a einer Kupplungsscheibe 706 einspannbar.

Wie beispielsweise aus Figur 12a erkennbar ist, stützen sich die Hebelelemente 709 radial außen an einem Bereich 712 des Kupplungsgehäuses 704 ab. Dieser Bereich 712 ist derart ausgestaltet, dass dieser als Schwenklagerung 712 für das ringartige Bauteil 710 bzw. für die Hebelelemente 709 dienen kann. Durch entsprechende Konizitätsveränderung des ringartigen Bauteils 710 und Abstützung desselben an der Schwenklagerung 712 kann das Kupplungsaggregat 701 zur Drehmomentübertragung geschlossen bzw. zur Unterbrechung einer Drehmomentübertragung geöffnet werden. Hierfür stützen sich die Hebelelemente 709 radial innerhalb der Schwenklagerung 712 an Abstützbereichen bzw. Nocken 714 der Anpressplatte 705 ab. Zwischen den Hebelelementen 709 und der Anpressplatte 705 ist eine Rampenanordnung 756 vorhanden. Mittels dieser Rampenanordnung 756 kann eine axiale Verlagerung der Anpressplatte 705 axial in Richtung der Gegendruckplatte 703 bewirkt werden, um den insbesondere an den Reibbelägen 706a auftretenden Verschleiß zumindest im Wesentlichen auszugleichen. Dadurch kann gewährleistet werden, dass der Betätigungsweg bzw. der Verschwenkwinkel des ringartigen Bauteils 710 über die Lebensdauer der Reibungskupplung zumindest im Wesentlichen konstant bleibt. Die vorerwähnte, axiale Verlagerung der Anpressplatte 705 zum Ausgleich des Reibbelagverschleißes erfolgt mittels einer Rotation bzw. Verdrehung des scheiben- bzw. ringartigen Bauteiles 710 gegenüber dem Kupplungsgehäuse 704.

Die in Figur 12a dargestellte Stellung der Hebelelemente 709 entspricht derjenigen, welche diese bei geöffneter Reibungskupplung 702 aufweisen. Wie aus Figur 12a ersichtlich ist, befinden sich dabei die Hebelelemente 709 zumindest annähernd in einer Planlage, also zumindest annähernd in einer Lage, in der sie parallel verlaufen zu einer senkrecht zur Rotationsachse 757 stehenden Ebene.

In Figur 12a ist weiterhin ein Bestandteil 731 eines Betätigungselementes teilweise dargestellt. Der Bestandteil 731 ist Teil eines Aktuatorsystems, mittels dessen sowohl die Hebelelemente 709 zum Einrücken bzw. Schließen der Reibungskupplung 702 in Richtung entgegen des Pfeiles 732 verschwenkt werden können als auch bei detektiertem Verschleiß zumindest an den Reibbelägen 706a eine Verschleißnachstellung durchgeführt werden kann, indem die radial inneren Bereiche des ringartigen Bauteils 710 über den normalen Schließweg hinaus axial verlagert werden.

Die für eine Verschleißnachstellung erforderliche Verdrehung des ringartigen Bauteiles 710 gegenüber dem Kupplungsgehäuse 704 erfolgt in ähnlicher Weise, wie dies in Zusammenhang mit den Figuren 1 bis 5a beschrieben wurde, mittels zweier freilaufähnlicher Einrichtungen 720 und 721, deren Funktionsweise im Folgenden noch näher beschrieben wird.

Wie beispielsweise aus Figur 12 ersichtlich, besitzt das ringartige Bauteil 710 einen gegenüber den Hebelelementen 709 zumindest überwiegend freigeschnittenen, radial äußeren, ringförmigen Bereich 742, der über eine Mehrzahl von Zugankern 758 mit dem tellerfederartigen Bereich 755 verbunden ist. Bei dem dargestellten Ausführungsbeispiel ist jeweils ein Zuganker 758 zwischen zwei in Umfangsrichtung benachbarten Betätigungselementen bzw. Zungen 709 vorgesehen. Bei dem dargestellten Ausführungsbeispiel ist der ringförmige Bereich 742 an einer Stelle 759 mit dem radial äußeren Bereich eines Hebelelementes 709 einstückig verbunden.

Zwischen wenigstens einer der freilaufähnlichen Einrichtungen 720, 721 und den Hebelelementen 709 ist wenigstens ein federndes Element 760 wirksam, welches, nachdem zumindest eine der freilaufähnlichen Einrichtungen eine verschleißnachstellende Verstellung erfahren hat, eine nachfolgende Verdrehung der Hebelelemente 709 bewirkt. Bei der in den Figuren 12 bis 16a dargestellten Ausführungsform ist dieses federnde Element durch einen mäanderförmigen Bereich 760 gebildet, der eine federnde Grundvorspannung aufweist und wirkungsmäßig zwischen der anlässlich einer Verschleißnachstellung zuerst wirksamen Freilaufeinrichtung 720 und einem Hebelelement 709 angeordnet ist. Die Vorspannung des hier mäanderförmigen, federnden Elementes 760 ist derart bemessen, dass gewährleistet wird, dass dieses über seinen gesamten Arbeitsbereich eine ausreichend große Umfangskraft erzeugt, um die Hebelelemente 709 entgegen der vorhandenen Reibkräfte, zum Beispiel im Bereich der Rampenanordnung 756, zu verdrehen. Derartige Reibkräfte können beispielsweise durch die zwischen der Anpressplatte 705 und dem Gehäuse 704 verspannten Blattfederelemente, welche die Anpressplatte 705 gegen die hebelartigen Betätigungselemente 709 verspannen, erzeugt werden.

Die verschiedenen, das ringartige Bauteil 709 bildenden Bereiche 755, 709, 758, 742 sind funktionsmäßig derart aufeinander abgestimmt, dass durch Konizitätsveränderung des ringartigen Bauteiles 710 in ähnlicher Weise, wie dies in Zusammenhang mit dem ringartigen Bauteil 10 beschrieben wurde, eine Durchmesserveränderung zumindest an den radial äußeren Randbereichen 742 des ringartigen Bauteils 710 bewirkt wird, welche insbesondere durch den ringförmigen Bereich 742 und die die Freilaufeinrichtungen 720 und 721 bildenden Abschnitte 722 und 723 gebildet ist.

Bezüglich der speziellen Ausgestaltung und Wirkungsweise der Freilaufeinrichtungen 720 und 721 wird auf die Beschreibung der Freilaufeinrichtungen 20 und 21 verwiesen. Es wird daher in Zusammenhang mit den Figuren 12 bis 16a auf eine detaillierte Beschreibung der Profilierungen und Gegenprofilierungen, die einerseits vom ringartigen Bauteil 710 und andererseits vom Kupplungsgehäuse 704 getragen werden, verzichtet. Erwähnt sei jedoch, dass bei der erfindungsgemäßen Ausgestaltung gemäß den Figuren 1 bis 5a das ringartige Bauteil 10 gegenüber dem Kupplungsgehäuse 4 im Uhrzeigerdrehsinn verdreht wird, wohingegen bei der Ausführungsform gemäß den Figuren 12 bis 16a diese Verdrehung entgegen des Uhrzeigerdrehsinnes erfolgt.

Wie bereits erwähnt, ist in Figur 12a schematisch ein Bestandteil 731 eines Aktuatorsystems dargestellt, mittels dessen auf die Hebelelemente 9 in Richtung des Pfeiles 732a eine Schließkraft ausgeübt werden kann. Zum Schließen des Kupplungsaggregates 701 werden die Hebelelemente 709 in Richtung des Pfeiles 732a um einen Betrag bzw. Weg 761 verschwenkt, der ohne Verschleiß in der Reibungskupplung 702 praktisch konstant bleiben würde.

Sobald eine einen vorgegebenen Wert überschreitende Veränderung des durch das Betätigungselement 731 zurückgelegten Weges durch eine Überwachungseinrichtung festgestellt wird, kann eine gezielte Betätigung bzw. Verschwenkung der Hebelelemente 709 in Richtung des Pfeiles 732a, also in Einrückrichtung, über den Weg 761 hinaus erfolgen. Ein derartiger Überweg in Schließrichtung ist in den Figuren 13a und 14a dargestellt, wobei in Figur 14a der für eine Nachstellung erforderliche, komplette Mindestüberweg 762 dargestellt ist, wohingegen in Figur 13a eine Zwischenposition der Hebelelemente 709 gezeigt ist. Wie aus den Figuren zu entnehmen ist, wird der Überweg 762 durch entsprechende elastische Verformung des ringartigen Bauteils 710, insbesondere dessen Hebelelemente 709, erzielt.

Um eine Verdrehung zum Zwecke einer Verschleißnachstellung des ringartigen Bauteiles 710 zu erhalten bzw. auszulösen, muss der Betätigungsüberweg 762 (Figur 14a) durchfahren werden. Durch den Überweg 762 erfährt das ringartige Bauteil 710 eine starke konische elastische Verformung. Bei dieser Verformung behält der ringförmige Bereich 755 praktisch den gleichen Durchmesser bzw. der Durchmesser des in sich geschlossenen, inneren ringförmigen Bereiches 755 verändert sich nur unwesentlich, wodurch die äußeren Bereiche 742 des ringartigen Bauteils 710 durch die Zuganker 758 auf einen kleineren Durchmesser gezogen werden. Dies bedeutet also, dass der äußere Rand des ringförmigen Bauteils 710 sich tendenzmäßig im Durchmesser verringert. Diese äußere Durchmesserverringerung bewirkt, wie dies aus Figur 13 ersichtlich ist, dass die Sperrklinke 724 des einen Freilaufes 720 in Umfangsrichtung gegenüber den mit dieser zusammenwirkenden Gegenprofilierungen 726, welche vom Gehäuse 702 getragen werden, verdreht wird. Während dieser Verdrehung bleibt die zweite Sperrklinke 725 in Eingriff mit den mit dieser zusammenwirkenden und vom Gehäuse ebenfalls getragenen Gegenprofilierungen 727. Der Betätigungsweg 762 ist derart bemessen, dass zumindest eine umfangsmäßige Verlagerung der Sperrklinke 724 erfolgt, die einer Zahnteilung entspricht, so dass nach erfolgter, entsprechender Verdrehung die radial federnd vorgespannte Sperrklinke 724 wieder in die Gegenprofilierung 726 einrasten kann, was in Figur 14 dargestellt ist. Ein Vergleich zwischen Figur 12 und Figur 14 zeigt, dass die Sperrklinke 724 um eine Zahnteilung entgegen des Uhrzeigerdrehsinnes verlagert wurde. Durch diese Verlagerung erfolgt auch eine zusätzliche Verspannung des als mäanderförmiger Abschnitt ausgestalteten Federelementes 760.

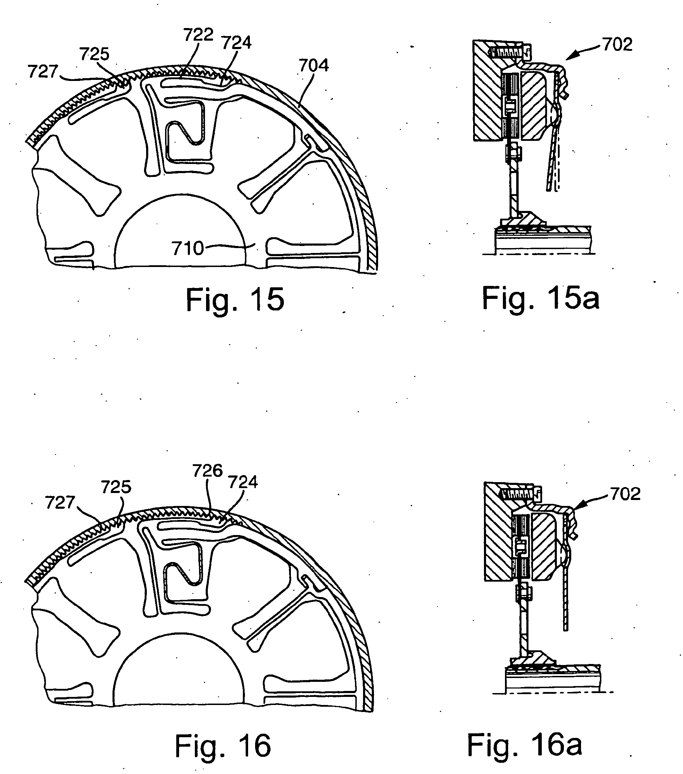

Bei Entlastung der Hebelelemente 709 aus ihrer in Figur 14a dargestellten, verspannten Lage nimmt das ringartige Bauteil 710 wieder die in Figur 12a dargestellte Lage ein. Diese Lage ist auch in Figur 14a strichpunktiert dargestellt. Während dieser Entspannungsphase des ringartigen Bauteiles 710 sinkt die axiale Belastung, welche durch das Betätigungselement 731 auf die Hebelelemente 709 ausgeübt wird. Die Belastung des ringförmigen Bauteiles 710 wird so weit abgesenkt, dass die von dem vorgespannten Federelement 760 ausgeübte Kraft ausreicht, um ein Verdrehen des ringartigen Bauteiles 710 zum Zwecke der gewünschten Verschleißnachstellung zu erzeugen. Wie aus Figur 15 ersichtlich ist, wird dabei das ringartige Bauteil 710 mittels der Sperrklinke 724 am Gehäuse 704 umfangsmäßig abgestützt, wodurch die radial federnde Sperrklinke 725 über die mit dieser zusammenwirkenden Gegenprofilierungen 727 gezogen wird, und zwar so lange, bis die Sperrklinke 725 um eine Profilteilung verdreht wurde, so dass diese, wie aus Figur 16 ersichtlich, wieder in die Gegenprofilierungen 727 einrasten kann. Aus Figur 16 ist ersichtlich, dass nach durchfahrenem Nachstellzyklus beide Sperrklinken 724, 725 gegenüber ihrer in Figur 12 dargestellten Position um eine Verzahnungsteilung entgegen des Uhrzeigersinnes verdreht wurden.

Aus den Figuren 14 bis 16 ist ersichtlich, dass beim wieder Öffnen der Reibungskupplung 702 die äußeren ringförmigen Bereiche 742, welche als Verdrehantrieb dienen, wieder ihre durchmessermäßige Ausgangsstellung einnehmen. Dabei bleibt die Sperrklinke 724 in der durch die Gegenprofilierungen 726 gebildeten Deckelverzahnung eingerastet. Die Sperrklinke 724 übt dabei in Kombination mit dem mäanderförmigen, vorgespannten Federelement 760 eine tangential- bzw. umfangsmäßige Kraft auf das ringartige Bauteil 710 aus. Sobald während der Ausrückbewegung die sich einer Verdrehung des ringartigen Bauteiles 710 widersetzenden Reibkräfte weit genug abgesunken sind, kann sich dieses Bauteil 710 verdrehen. Dabei wird die Sperrklinke 725 in die nächste Zahnlücke, welche durch die Gegenprofilierungen 727 gebildet werden, gezogen. Das ringartige Bauteil 710 befindet sich dann, zumindest im ausgerückten Zustand der Reibungskupplung, wieder in der der Figur 12a entsprechenden Ausgangsstellung bezüglich seiner konischen Aufstellung.

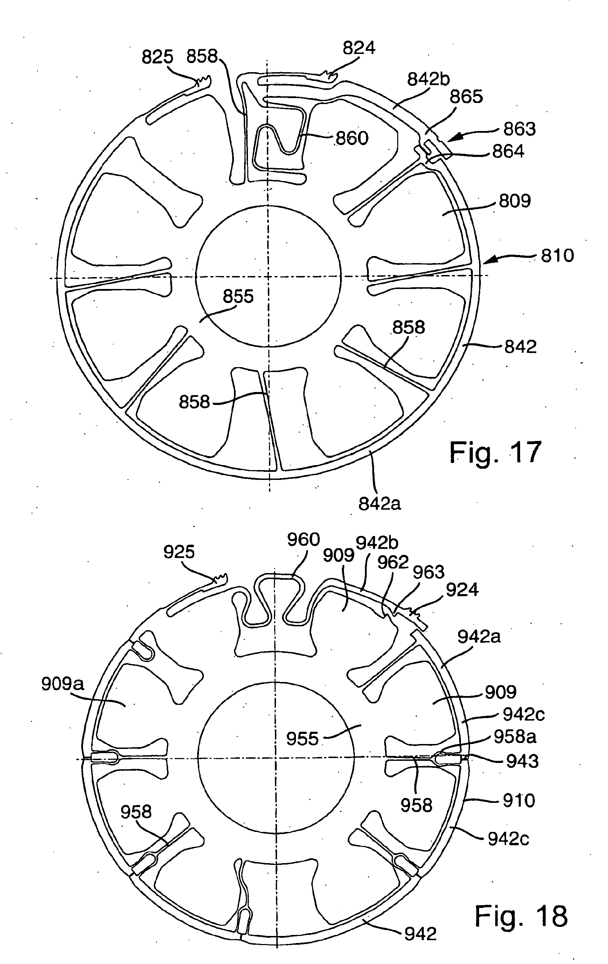

In Figur 17 ist eine weitere Ausgestaltungsmöglichkeit eines ringartigen Bauteiles 810 mit Hebelelementen 809 dargestellt. Das ringförmige Bauteil 810 unterscheidet sich gegenüber dem ringförmigen Bauteil 710 im Wesentlichen dadurch, dass die zwischen den äußeren, ringförmig angeordneten Bereichen 842 und dem inneren, ringförmigen, federnden Bereich 855 vorgesehenen Zuganker bzw. Zugstreben 858 in Umfangsrichtung geneigt, also gegenüber einer Radialrichtung schräg angeordnet sind. Die Schräge der Zuganker 858 ist in Sichtrichtung von radial innen nach radial außen betrachtet, in Drehrichtung des ringartigen Bauteiles 810 innerhalb einer Reibungskupplung ausgerichtet. Bei dem in Figur 17 dargestellten Ausführungsbeispiel bedeutet dies, dass die Zuganker 858 entgegen des Uhrzeigerdrehsinns geneigt von radial innen nach radial außen verlaufen.

In Figur 17 ist das drehbare, ringartige Bauteil 810 bezüglich der äußeren ringförmigen Bereiche 842 in seiner entspannten Lage dargestellt. Wie aus Figur 17 ersichtlich ist, bilden die radial äußeren ringförmigen Bereiche 842 keinen geschlossenen äußeren Ring. Diese radial äußeren Bereiche 842 sind einerseits durch einen langen, sich zumindest über dreiviertel des Umfanges des ringartigen Bauteiles 810 erstreckenden, sektorförmigen Bereich 842a und einen kürzeren, sich in Umfangsrichtung erstreckenden Bereich 842b gebildet. Der Bereich 842b ist dabei über einen als mäanderförmigen Bereich 860 ausgebildeten Energiespeicher 860 sowie einen Zuganker 858 mit den übrigen Bereichen des ringartigen Bauteiles 810 verbunden. An dem Bereich 842b ist auch eine Sperrklinke 824 angeformt. Die zweite Sperrklinke 825 ist, in Umfangsrichtung betrachtet, im Anschluss an den sektorförmigen Bereich 842a vorgesehen.

Bezüglich der Ausgestaltung und Wirkungsweise der Sperrklinken 724, 725, 824 und 825 wird auch auf die entsprechende Beschreibung der Figuren 1 bis 5a verwiesen. Wie aus einem Vergleich zwischen den Figuren 12 und 17 hervorgeht, unterscheiden sich die beiden Darstellungen der ringartigen Bauteile 710 und 810 im Wesentlichen dadurch, dass die einander zugewandten Enden der sich in Umfangsrichtung erstreckenden Bereich 842a und 842b in Figur 17 nicht ineinander greifen bzw. in radialer Richtung nicht miteinander verriegelt sind. Diese aus Figur 12 ersichtliche Verriegelung bzw. Verbindung ist beim Einbau des entsprechenden ringförmigen Bauteils vorhanden. Die hierfür zwischen den Bereichen 842a und 842b vorgesehene Verbindungsstelle 863 ist derart ausgestaltet, dass beim Einhängen der beiden Enden 864, 865 zumindest der Bereich 842b in Umfangsrichtung entgegen des Uhrzeigerdrehsinns verschoben wird. Diese Verschiebung bewirkt, dass der Energiespeicher 860 sowie der Zuganker 858 elastisch vorgespannt werden. Eine derartige Vorspannung ist, wie in Zusammenhang mit den Figuren 12 bis 16a beschrieben wurde, erforderlich, um eine einwandfreie Verdrehung des ringartigen Bauteiles 710 bzw. 810 innerhalb der Reibungskupplung zum Zwecke einer Nachstellung zu gewährleisten. Der mit der Sperrklinke 824 verbundene Bereich 842b ist, wie aus den Figuren 12 und insbesondere 17 ersichtlich ist, in Umfangsrichtung des ringartigen Bauteiles 710 bzw. 810 verdreh- bzw. verlagerbar gegenüber dem Bereich 842a, welcher wirkungsmäßig mit der Sperrklinke 825 drehverbunden ist. Die Verlagerung des Bereiches 842b bzw. der Sperrklinke 824 in Umfangsrichtung gegenüber dem Bereich 842a erfolgt dabei entgegen der Federwirkung des mäanderförmigen Energiespeichers 860 und des Zugankers 858. Die sich in Umfangsrichtung erstreckenden Bereiche 842b und 842a bilden einen Antriebsrand für das ringartige Bauteil 810, der durch eine entsprechende Konizitätsveränderung des ringartigen Bauteiles 810 eine Verdrehung desselben gegenüber zum Beispiel einem Kupplungsgehäuse bewirkt.

Das in Figur 18 dargestellte ringförmige Bauteil 910 besitzt an seinem Außenumfang ebenfalls einen gegenüber den Hebelelementen 909 freigeschnittenen Außenrand 942, der, ähnlich wie dies in Zusammenhang mit Figur 17 beschrieben wurde, einen Bereich 942a und 942b aufweist. Der Bereich 942a ist jedoch in mehrere Sektoren 942c unterteilt. Hierfür ist, in Umfangsrichtung betrachtet, im Bereich jeweils zwischen zwei benachbarten Hebelelementen 909 im Bereich 942a eine Trennstelle 943, wie zum Beispiel ein Schlitz, eingebracht. Die einer Trennstelle 943 benachbarten, sektorförmigen Abschnitte 942c sind mit dem tellerfederartigen, ringförmigen Bereich 955 über Y-artig ausgebildete Zuganker 958 verbunden. Der radial äußere U- bzw. V-förmige Bereich 958a dieser Zuganker 958 verbindet dabei die jeweils in Umfangsrichtung benachbarten Abschnitte 942c. Die Schenkel der U- bzw. V-förmig ausgebildeten Bereiche 958a sind dabei, in Umfangsrichtung betrachtet, zueinander elastisch vierformbar. Das ringförmige Bauteil 910 besitzt in ähnlicher Weise, wie dies in Zusammenhang mit Figur 17 beschrieben wurde, eine Sperrklinke 925. Auch der Bereich 942b ist wiederum einerseits über einen Energiespeicher 916, der hier in Umfangsrichtung mäanderförmig ausgestaltet ist, mit den Hebelelementen 909 wirkungsmäßig verbunden und trägt andererseits wiederum eine Sperrklinke 924. In ähnlicher Weise, wie dies in Figur 17 der Fall ist, sind auch in Figur 18 die Bereiche 942a und 942b im nicht verriegelten Zustand dargestellt. Zur Montage des in Figur 18 dargestellten ringartigen Bauteiles 910 in eine Reibungskupplung wird der Bereich 942b in radialer und in Umfangsrichtung vorgespannt, wodurch auch der mäanderförmige Energiespeicher 960 sowohl in radialer als auch in Umfangsrichtung vorgespannt wird. Um stets eine Grundvorspannung zu gewährleisten, sind an dem Bereich 942b und an diesem radial gegenüber liegenden Hebelelement 909 in Umfangsrichtung wirksame Abstützbereiche 962, 963 vorgesehen. Die Abstützbereiche 962, 963 sind bei der dargestellten Ausführungsform durch Nasen gebildet, die in Umfangsrichtung, entsprechend der gewünschten Vorspannung des Bereiches 960, versetzt sind.

Der insbesondere in Zusammenhang mit den Figuren 12 bis 16a erforderliche Überweg 762 in Schließrichtung kann, wie bereits erwähnt, durch entsprechende elastische Verformung des ringartigen Bauteiles 710, 810, 910 erzielt werden. Zumindest ein Teil des für die Nachstellung erforderlichen Überweges kann jedoch auch durch elastische Verformung des Kupplungsgehäuses und/oder durch Vorhandensein einer Restbelagfederung, zum Beispiel zwischen den Reibbelägen 706a, erzielt werden. Eine weitere Lösung kann darin bestehen, wirkungsmäßig zwischen den entsprechenden Hebelelementen 709, 809, 909 und der von diesen beaufschlagten Anpressplatte, zum Beispiel 705, zumindest ein vorgespanntes Federelement vorzusehen, welches für den erforderlichen Überweg eine Restfederung aufweist. Die Vorspannung eines derartigen Federelementes kann dabei in vorteilhafter Weise derart bemessen sein, dass diese Vorspannung ausreichend groß ist, um die gewünschte Drehmomentübertragung durch Belastung der Anpressplatte zu gewährleisten.

Es sei noch erwähnt, dass die in den Figuren 12a und 14a dargestellten, normalen Betätigungswege 761 und Nachstellwege 762 im Verhältnis zueinander nicht maßstäblich dargestellt sind. Das Verhältnis zwischen diesen beiden Wegen 761, 762, kann je nach Anwendungsfall verschieden sein. Bei den für Pkw üblichen Kupplungsgrößen mit einem Außenscheibendurchmesser von 200 mm bis 240 mm, kann der normale Einrückweg 761 in etwa 8 bis 10 mm betragen und der Überweg 762 für die Nachstellung ca. 3 bis 5 mm, so dass sich ein Gesamteinrückweg zum Auslösen einer Nachstellung von ca. 11 bis 15 mm ergibt. Zweckmäßig ist es, wenn der Einrücküberweg 762 ca. 20 bis 50 % des normalen Einrückweges 761 beträgt.

Die in Zusammenhang mit den bisherigen Figuren beschriebenen ringartigen Bauteile, die sowohl die Hebelelemente als auch Funktionsbereiche für den Drehantrieb umfassen, sind bezüglich der Auslegung verhältnismäßig komplex, da sie eine Vielzahl von Bereichen besitzen, die unterschiedliche Funktionen gewährleisten müssen.

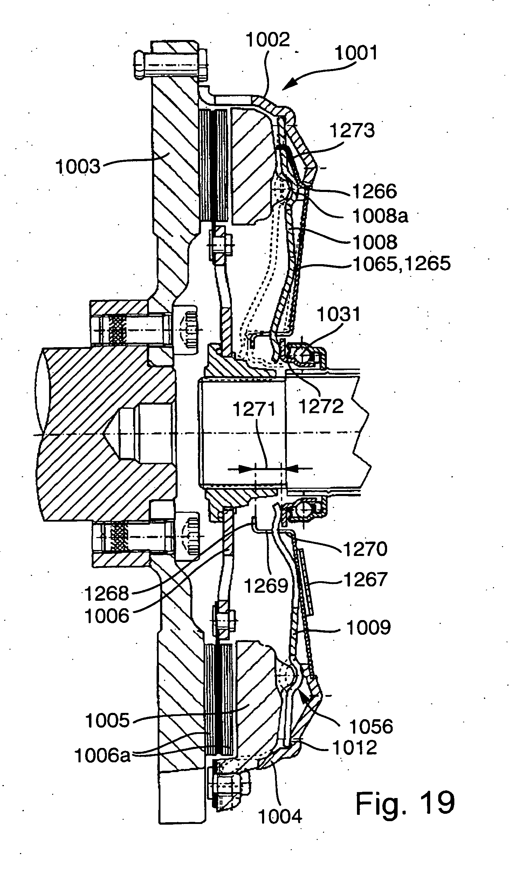

Bei dem in Figur 19 dargestellten selbstnachstellenden Kupplungsaggregat 1001 besitzt die selbstnachstellende Reibungskupplung 1002 ein die Schließ- bzw. Betätigungskräfte auf die Anpressplatte 1005 übertragendes Hebelelement 1009 sowie ein elastisch verformbares, scheibenförmiges Element 1065, das als Drehantrieb für das Hebelelement 1009 dient.

Das Kupplungsaggregat 1001 umfasst wiederum eine Gegendruckplatte 1003 sowie eine Kupplungsscheibe 1006, deren Reibbeläge 1006a axial zwischen der Anpressplatte 1005 und der Gegendruckplatte 1003 mittels des Hebelelementes 1009 axial einspannbar sind. Die Anpressplatte 1005 ist in an sich bekannter Weise wiederum mit einem Kupplungsgehäuse 1004 drehfest, jedoch axial verlagerbar, verbunden. Das Hebelelement 1009 besteht aus einer Mehrzahl von in ringartiger Anordnung vorgesehenen Hebeln 1008, die vorzugsweise derart miteinander verbunden sind, dass sie in Bezug aufeinander eine definierte Umfangslage beibehalten. Hierfür können die einzelnen Hebel 1008 untereinander durch elastisch verformbare Bereiche verbunden sein, wobei diese Bereiche entweder einstückig in die Hebel 1008 übergehen oder aber durch wenigstens ein zusätzliches Bauelement gebildet sind, das mit den Hebeln 1008 entsprechend verbunden ist, zum Beispiel durch Nietverbindungen, Klammerverbindungen oder Schweißverbindungen.

Die Hebel 1008 des Hebelelementes 1009 sind, ähnlich wie dies auch in Zusammenhang mit den bisherigen Figuren beschrieben wurde, an einer vom Gehäuse 1004 getragenen Schwenklagerung 1012 verschwenkbar abgestützt. Die radial inneren Zungenbereiche der Hebel 1008 sind von einem Betätigungsorgan 1031, das hier durch ein Ausrücklager gebildet ist, beaufschlagbar. Die Hebel 1008 besitzen einen radial innerhalb der Schwenklagerung 1012 vorgesehenen Bereich 1008a zur Beaufschlagung der Anpressplatte 1005 in Schließrichtung des Kupplungsaggregates 1001. Ähnlich wie dies in Zusammenhang mit den vorangegangenen Figuren beschrieben wurde, ist wiederum eine zumindest den Verschleiß an den Reibbelägen 1006a kompensierende Nachstelleinrichtung 1056 zwischen den Hebeln 1008 und der Anpressplatte 1005 vorgesehen. Aus Figur 19 ist erkennbar, dass diese Nachstelleinrichtung eine Rampenanordnung besitzt, die gewährleistet, dass bei einer entsprechenden Verdrehung des Hebelelementes 1009 die Anpressplatte 1005 in Richtung der Gegendruckplatte 1003 verlagert wird. Insofern ist die Funktion des Hebelelementes 1009 die gleiche, wie bei den bereits beschriebenen Ausführungsbeispielen.

Der wesentliche Unterschied einer Ausgestaltung gemäß Figur 19 besteht darin, dass die die Verdrehfunktion des Hebelelementes 1009 gewährleistenden Funktionsabschnitte nicht mehr unmittelbar mit der Hebelanordnung 1008 verbunden sind, sondern, wie bereits erwähnt, von einem besonderen, getrennten, scheibenartigen Element 1065 übernommen wird. Dieses Element 1065 ist jedoch antriebsmäßig mit der Hebelanordnung 1008 gekoppelt. Eine solche Ausgestaltung hat den Vorteil, dass das scheibenartige Element 1065 speziell auf die ihm zugedachte Funktion ausgelegt werden kann. So ist man beispielsweise nicht mehr an die Materialdicke des zur Herstellung des Hebelelementes 1009 erforderlichen Bleches gebunden. Auch kann ein anderes Material bzw. eine andere Materialqualität verwendet werden. Insbesondere kann das scheibenartige Element 1065 aus einem Stahl mit besseren Federeigenschaften gebildet werden.

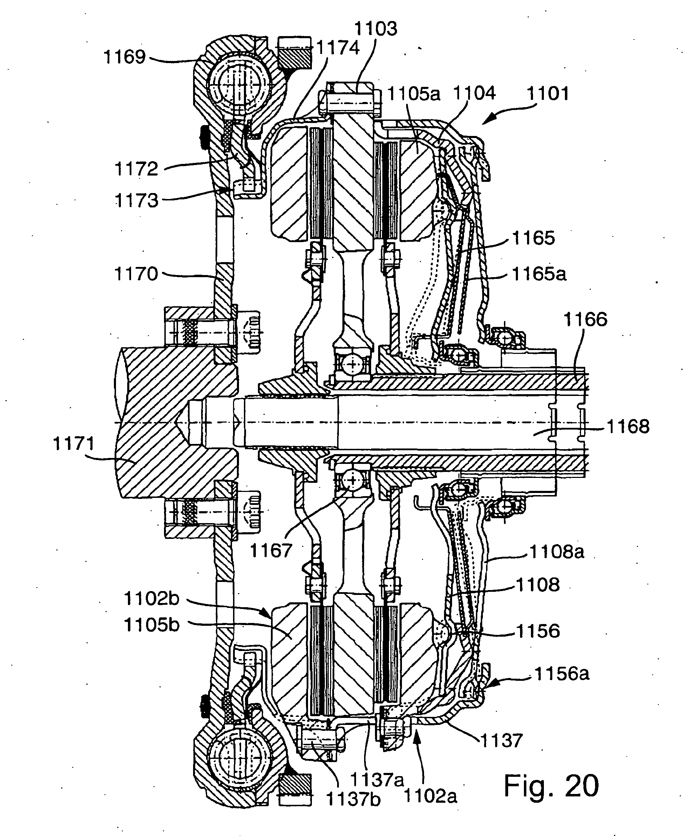

Das in Figur 20 dargestellte Kupplungsaggregat 1101 besitzt zwei Reibungskupplungen 1102a, 1102b, die bezüglich des Aufbaues und der Funktionsweise ähnlich angeordnet und wirksam sind, wie dies in Zusammenhang mit den Reibungskupplungen 202a und 202b gemäß Figur 7 beschrieben wurde. Gegenüber der in Figur 7 dargestellten Ausführungsform unterscheidet sich die in Figur 20 dargestellte dadurch, dass die den beiden Reibungskupplungen 1102a und 1102b gemeinsame Gegen- bzw. Zwischendruckplatte 1103 auf einer Getriebeeingangswelle 1166 gelagert und axial fest aufgenommen ist. Bei dem dargestellten Ausführungsbeispiel erfolgt diese Festlegung bzw. Lagerung mittels eines Kugellagers 1167. Es können jedoch auch andere Lagerungen, wie zum Beispiel entsprechend ausgestaltete Gleitlagerungen, Verwendung finden. Auch sind Kombinationen von verschiedenen Lagerarten denkbar, wie zum Beispiel radiales Gleitlager und axiales Nadellager, zur Abstützung der Gegendruckplatte 1103. Bei dem dargestellten Ausführungsbeispiel erfolgt die Lagerung und Abstützung der Gegen- bzw. Zwischendruckplatte 1103 auf der als Hohlwelle ausgebildeten Getriebeeingangswelle 1166. Die in dieser Hohlwelle 1166 aufgenommene Innenwelle 1168 könnte jedoch ebenfalls zur Aufnahme der Gegendruckplatte 1103 herangezogen werden, wobei hierfür entsprechende geringfügige, konstruktive Abänderungen notwendig wären.

Das Kupplungsaggregat 1101 besitzt weiterhin einen Drehschwingungsdämpfer 1169, dessen Eingangsteil 1170, welches scheibenförmig ausgebildet ist, mit der Motorabtriebswelle 1171 verschraubt ist. Das flanschartige Ausgangsteil 1172 ist über eine axiale Steckverbindung 1173 mit einem als Verbindungselement dienenden, deckelartigen Bauteil 1174 drehgekoppelt. Der äußere Rand des Bauteiles 1174 ist mit der Gegendruckplatte 1103 zum Beispiel über Nietverbindungen starr verbunden.

Das Kupplungsaggregat 1101 besitzt ebenfalls ein Verbindungselement 1137, das im Wesentlichen die gleiche Funktion wie das Verbindungselement 237 gemäß Figur 7 hat. Aus Figur 20 ist ersichtlich, dass dieses Verbindungselement 1137 axiale Bereiche 1137a besitzt, die fest mit der axial verlagerbaren Anpressplatte 1105b der Reibungskupplung 1102b verbunden sind. Dies erfolgt bei dem dargestellten Ausführungsbeispiel mittels Vernietungen 1137b.

Wie dies in Zusammenhang mit Figur 19 beschrieben wurde, sind zum Verschleißausgleich bei den beiden Reibungskupplungen 1102a und 1102b jeweils ein scheibenartiges Element 1165 und 1165a vorgesehen, welche durch Veränderung ihrer kegelstumpfförmigen Gestalt bzw. durch Veränderung ihrer Konizität eine Verdrehung gegenüber dem diese abstützenden Bauteil 1104 erfahren. Durch diese Verdrehung erfolgt in ähnlicher Weise, wie dies in Zusammenhang mit Figur 19 beschrieben wurde, eine Nachstellung innerhalb der Reibungskupplungen 1102a bzw. 1102b zum Zwecke des Ausgleiches eines zumindest an den Reibbelägen der entsprechenden Kupplungsscheibe auftretenden Verschleißes.

Der Ausgleich dieses Verschleißes erfolgt bei der in Figur 20 dargestellten Ausführungsform weiterhin mittels einer Hebelanordnung 1108 und 1108a, die durch die scheibenartigen Elemente 1165 und 1165a ebenfalls entsprechend verdreht werden. Zwischen den verdrehbaren Hebelanordnungen 1108 und 1108a und der von diesen entweder mittelbar oder unmittelbar beaufschlagten Anpressplatte 1105b bzw. 1105a ist eine entsprechend dem Verschleiß verstellbare Rampenanordnung 1156, 1156a vorgesehen, wodurch bei einer Verdrehung einer der entsprechenden Hebelanordnungen 1108, 1108a die zugehörige Anpressplatte 1105a, 1105b axial in Richtung der Gegendruckplatte 1103 nachgestellt wird.

Bei dem dargestellten Ausführungsbeispiel stützen sich beide scheibenartigen Nachstellelemente 1165 und 1165a an dem als Kupplungsgehäuse ausgebildeten Blechdeckel 1104 ab.

Es ist ersichtlich, dass die Reibungskupplung 1102a bezüglich des Aufbaues praktisch identisch ist mit der Reibungskupplung 1002 gemäß Figur 19.

Die beiden scheibenartigen Nachstellelemente 1165 und 1165a sind - in axialer Richtung betrachtet - axial zwischen den beiden Hebelanordnungen 1108 und 1108a angeordnet.

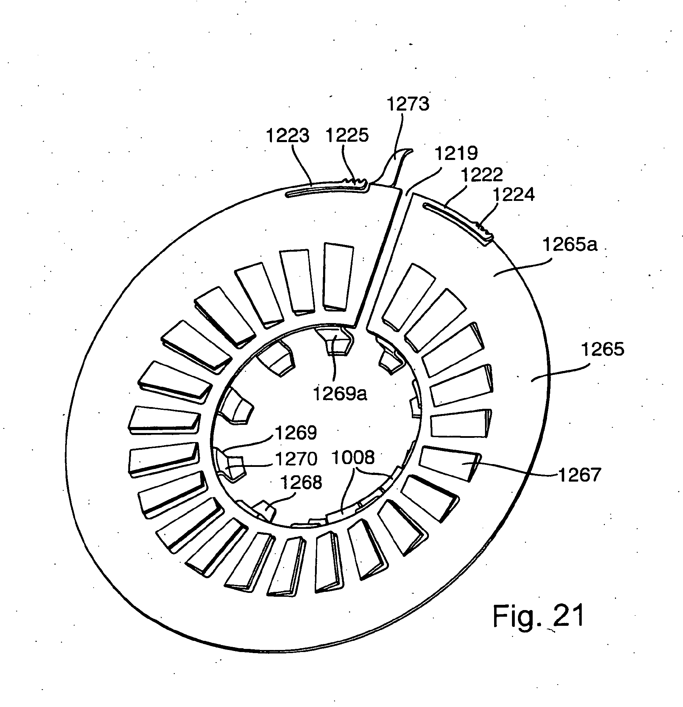

In Figur 21 ist eine Ausgestaltung eines die Verschleißnachstellung bewirkenden Elementes 1265 dargestellt, welches bei der Reibungskupplung 1002 gemäß Figur 19 oder zumindest einer der Reibungskupplungen 1102a, 1102b gemäß Figur 20 Verwendung finden kann.

Die Wirkungsweise und Anordnung des scheibenartigen Elementes 1265 wird im Folgenden in Verbindung mit Figur 19 beschrieben.

Das in Figur 21 dargestellte, als Verschleißnachstellelement dienende, scheibenartige Element 1265 ist ringartig ausgebildet und besitzt radial außen, beidseits einer zumindest eine Außendurchmesserveränderung des scheibenartigen Elementes 1265 ermöglichenden Trennstelle 1219, Sperrklinken 1224 und 1225. Der die Trennstelle bildende Schlitz 1219 hat eine ähnliche Funktion wie die in Zusammenhang mit den vorangegangenen Figuren beschriebenen Trennschlitze 19, 119, 319, 519 und 619. Der Schlitz 1219 soll also gewährleisten, dass bei einer Konizitätsveränderung des elastischen, scheibenartigen Elementes 1265 dieses sich im Durchmesser verändern kann, also beispielsweise durch Vergrößerung der Konizität zusammenziehen und bei Entlastung wieder durchmessermäßig aufweiten kann.

Bei dem dargestellten Ausführungsbeispiel ist durch den Trennschlitz 1219 das gesamte Bauteil 1265 in radialer Richtung durchtrennt. Es kann jedoch auch zweckmäßig sein, anstatt einer vollständigen Durchtrennung, in Umfangsrichtung elastisch nachgiebige Bereiche vorzustehen, die bei Konizitätsveränderungen des scheibenartigen Elementes 1265 in Umfangsrichtung elastisch federn können. Dadurch kann ebenfalls die gewünschte Durchmesserveränderung bzw. das gewünschte durchmessermäßige Zusammenziehen und Aufweiten ermöglicht werden.

Beidseits der Trenn- bzw. Ausgleichsstelle 1219 sind jeweils zumindest eine Sperrklinke 1224 bzw. 1225 vorgesehen, die ähnlich ausgebildet und wirksam sind, wie die in Zusammenhang mit den vorangegangenen Figuren beschriebenen Profilierungen bzw. Sperrklinken 24, 25, 424, 425, 724, 725, 824, 825, 924, 925. Die Profilierungen bzw. Sperrklinken 1224, 1225 sind mit dem Grundkörper 1265a des scheibenartigen Elementes 1265 in radialer. Richtung federnd verbunden, so dass sie eine radiale Verlagerungsmöglichkeit gegenüber dem ringförmigen Grundkörper 1265a besitzen. Diese elastische Anbindung erfolgt mittels elastischer Stege 1222, 1223, die die gleiche Funktion und eine ähnliche Ausgestaltung haben wie die zum Beispiel in Verbindung mit den Figuren 1 bis 5a beschriebenen, federnden Stege bzw. Bereiche 22, 23. Die Sperrklinken 1224, 1225 greifen in entsprechend angepasste Gegenprofilierungen, welche beispielsweise bei einer Ausgestaltung einer Reibungskupplung gemäß Figur 19 am Innenrand 1266 des Gehäuses 1004 vorgesehen sind. Diese Gegenprofilierungen sind ähnlich ausgebildet wie die in Zusammenhang mit den vorangegangenen Figuren beschriebenen Gegenprofilierungen, beispielsweise 26, 27 gemäß den Figuren 1 bis 5a oder 726, 727 gemäß den Figuren 12 bis 16a.

Das in Figur 21 dargestellte, scheibenartige Element 1265 besitzt im Bereich des ringförmigen Grundkörpers 1265a Anformungen bzw. Ausschnitte 1267, welche Belüftungsprofile bilden, die bei Rotation der mit einem solchen Element 1265 ausgerüsteten Reibungskupplung eine Luftkühlung derselben ermöglichen. In Figur 19 ist eine derartige Profilierung 1267 schematisch dargestellt.

Das als Nachstellelement dienende scheibenartige Element 1265, das sich axial am Gehäuse 1004 abstützt, besitzt Beaufschlagungsbereiche 1268, welche zur Konizitätsveränderung des scheibenartigen Elementes 1265 beaufschlagt werden. Bei dem dargestellten Ausführungsbeispiel sind die Beaufschlagungsbereiche 1268 durch am Innenrand des ringförmigen Grundkörpers 1265a angeformte Zungen 1269 gebildet. Hierfür besitzen die Zungen 1269 einen in axialer Richtung verlaufenden Bereich 1270, an den sich radial nach innen abgebogene Bereiche, welche die Beaufschlagungsbereiche 1268 bilden, anschließen. Die Zungen 1269 werden zunächst als radial nach innen vom ringförmigen Grundkörper 1265a hervorstehende Zungen aus der Blechplatine herausgeschnitten und dann entsprechend durch Umbiegen geformt.

Die Zungen 1269 erstrecken sich axial zwischen den Freiräumen, welche benachbarte Hebel 1008 trennen, hindurch. In Figur 21 sind zum Verständnis schematisch die radial inneren Bereiche zweier derartiger Hebel 1008 dargestellt.

Aufgrund der vorbeschriebenen Ausgestaltung und Anordnung des scheibenartigen Elementes 1265 werden, wie dies in Verbindung mit Figur 19 verständlich ist, beim Verschwenken der Hebel 1008 um die Schwenklagerung 1012 und nach Durchlaufen eines Betätigungsweges 1271 die Beaufschlagungsbereiche 1268 des Betätigungselementes 1031 unmittelbar beaufschlagt. Diese Beaufschlagung erfolgt bei dem dargestellten Ausführungsbeispiel durch den mit der Reibungskupplung 1002 mitlaufenden Lagerring 1272.

Bei Überschreitung dieses maximal Soll-Einrückweges 1271 wird das scheibenartige Element 1265 elastisch verformt, so dass aufgrund der dabei erfolgenden Vergrößerung seiner Konizität ein umfangsmäßiges Zusammenziehen des ringartigen Grundkörpers 1265a erfolgt. Dadurch wird zunächst die Sperrklinke 1224 entsprechend einer Verzahnungsteilung in Umfangsrichtung weitertransportiert, ähnlich wie dies in Zusammenhang mit den Sperrklinken 25 und 724 beschrieben wurde. Bei Entlastung des scheibenartigen Elementes 1265 nimmt der ringförmige Grundkörper 1265a wieder einen größeren Durchmesser ein, wodurch die Sperrklinke 1225 in ähnlicher Weise wie dies in Zusammenhang mit der Sperrklinke 24 und 724 beschrieben wurde, zumindest um eine entsprechende Zahnlücke weitertransportiert wird. Durch die dabei erfolgende Verdrehung des scheibenartigen Elementes 1265 wird auch die Hebelanordnung 1008 verdreht. Diese Verdrehung kann mittels wenigstens einer der Zungen 1269 erfolgen, welche sich an einem der in Umfangsrichtung miteinander verbundenen Hebel 1008 umfangsmäßig abstützt. In vorteilhafter Weise kann dies die Zunge 1269a sein, welche auf der Seite der Trennstelle 1219 sich befindet, auf der sich auch die Sperrklinke 1225 befindet. Das scheibenartige Element könnte jedoch auch mittels wenigstens eines federnden, blattfederartigen Bereiches oder Teiles mit der Hebelanordnung drehgekoppelt sein.

In Figur 19 ist eine weitere Möglichkeit einer antriebsmäßigen Drehverbindung zwischen dem scheibenartigen Element 1265 und der Hebelanordnung 1008 schematisch dargestellt. Wie aus der oberen Hälfte der Figur 19 ersichtlich ist, kann wenigstens eine Zunge 1273 vorgesehen werden, die einerseits im radial äußeren Bereich eines Hebels bzw. der Hebelanordnung 1008 drehfest eingehängt ist und andererseits eine drehfeste Verbindung mit dem scheibenartigen Element 1265 aufweist. Hierfür kann der Antriebsbereich bzw. die Antriebszunge 1273 einstückig mit dem Grundkörper 1265a des Elementes 1265 ausgebildet sein. Es kann jedoch auch ein separates Bauteil, wie zum Beispiel wenigstens eine Blattfeder, Verwendung finden, das an den entsprechenden Bauteilen drehfest angelenkt ist. In vorteilhafter Weise ist auch eine derartige Antriebszunge 1273 auf der Seite der Trennstelle 1219 vorgesehen, auf der sich die Sperrklinke 1225 befindet. In Figur 21 ist schematisch eine derartige Sperrklinke 1273 dargestellt.

Die Sperrklinken 1224 und 1225 sind also Bestandteil von freilaufähnlichen Einrichtungen, wie sie beispielsweise in Zusammenhang mit den Figuren 1 bis 5a und 12 bis 16a beschrieben wurden. Die für die Konizitätsveränderung eines scheibenartigen Elementes 1265 vorgesehenen Beaufschlagungsbereiche 1268 können auch derart ausgestaltet werden, dass diese mit Bereichen der Hebel 1008 zusammenwirken anstatt mit dem Lagerring 1272.

Aus der vorangegangenen Beschreibung geht hervor, dass die Konizitätsveränderung des scheibenartigen Elementes 1265 ausreichend groß sein muss, damit die umfangsmäßige Bewegung am Außenrand wenigstens gleich groß, vorzugsweise zumindest geringfügig größer ist als die Breite bzw. Teilung der Sperrklinkenverzahnung 1224 bzw. 1225, wobei diese Sperrklinkenverzahnungen, wie insbesondere in Verbindung mit den Figuren 1b bis 5a beschrieben wurde, lediglich in eine Drehrichtung verdrehbar sind und in die andere sperren. Durch eine derartige Auslegung kann mit einem Vor- und Rückhub im Bereich des Innenrandes des scheibenförmigen Elementes 1265 eine Drehbewegung desselben um eine Verzahnungsteilung erfolgen.

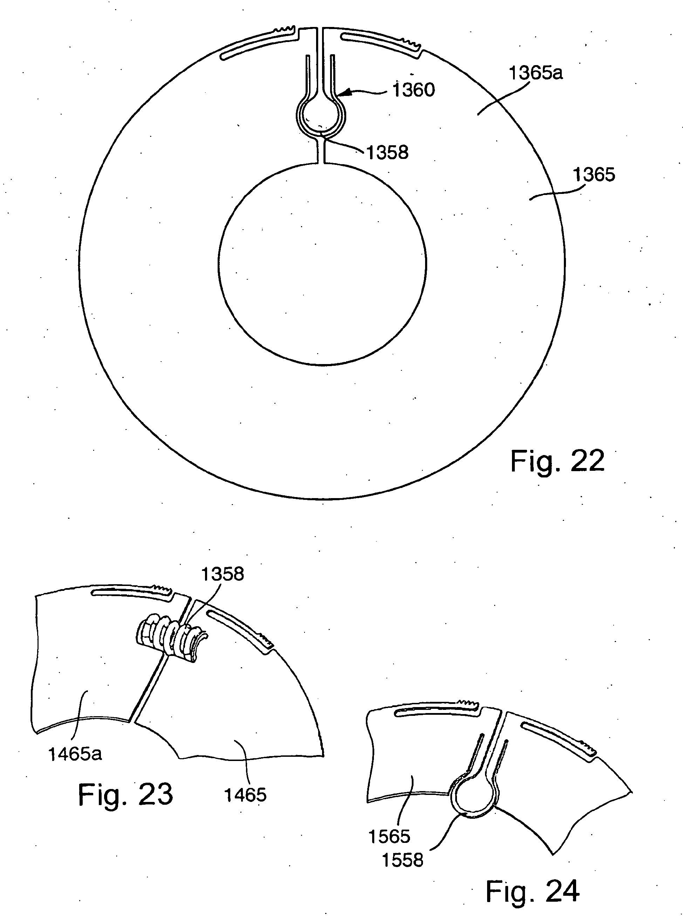

In Figur 22 ist ein weiteres scheibenartiges Element 1365 dargestellt, das einen praktisch in sich geschlossenen Grundkörper 1365 besitzt. Die Verformungseigenschaften des Grundkörpers 1365a können jedoch durch Einbringung von loch- bzw. schlitzartigen Ausschnitten, die gegebenenfalls eine Luftkühlung der entsprechenden Reibungskupplung bewirken, verändert werden. Das scheibenartige Element 1365 besitzt eine in Umfangsrichtung elastische Stelle 1360, die durch einen haarnadelähnlich ausgebildeten, als Biegebalken wirksamen Bereich 1358 gebildet ist. Dieser elastische Bereich 1358 ist durch Einbringung von entsprechend ausgebildeten Schlitzen und Öffnungen in das Grundmaterial des scheibenartigen Elementes 1365 gebildet. Bei dem dargestellten Ausführungsbeispiel befinden sich die elastischen Bereiche 1358 voll im radialen Erstreckungsbereich des ringförmigen Grundkörpers 1365a.

In Figur 23 ist eine weitere Ausgestaltungsmöglichkeit eines scheibenartigen Elementes 1465 dargestellt. Hier wird die umfangsmäßige Verspannung des ringförmigen Grundkörpers 1465a mittels eines separaten Energiespeichers, der hier eine Schraubenfeder 1358 bildet, erzielt.

Bei dem Ausführungsbeispiel eines scheibenartigen Elementes 1565 gemäß Figur 24 ist wiederum, ähnlich wie bei Figur 22, ein haarnadelförmiger, in Umfangsrichtung federnderBereich 1558 vorgesehen. Der als Biegebalken dienende Bereich 1558 ragt jedoch gegenüber dem Innenrand des scheibenartigen Elementes 1525 radial hervor.

In Zusammenhang mit den Figuren 12 bis 21 wurde eine Verschleißnachstellung von Reibungskupplungen beschrieben, die einen über den normalen Einrückweg hinausgehenden Weg benötigt, die Nachstellung also nicht unmittelbar aufgrund des aufgetretenen Verschleißes erfolgt. Es sind somit zusätzliche Regel- bzw. Steuerelemente erforderlich, die bei Vorhandensein einer definierten Verschleißgröße gezielt eine entsprechende Betätigung mit Überweg auslösen.

Zumindest bei Ausführungsformen gemäß den Figuren 19 bis 21, bei denen ein separates Element 1065, 1165, 1165a, 1265 eingesetzt wird, um die Nachstellung auszulösen und die Hebelelemente entsprechend zu verdrehen, kann auch eine Verschleißnachstellung erfolgen, die unmittelbar abhängig ist von den aufgrund des aufgetretenen Verschleißes bedingten Positionsveränderungen der Anpressplatte 1005, 1105a, 1105b und/oder der Hebel bzw. Hebelelemente 1008, 1108, 1108a. Bei einer derartigen Ausgestaltung ist man unabhängig von zusätzlichen Regel- bzw. Steuermitteln.

Die Feinheit einer derartigen Verschleißnachstellung ist dabei abhängig von dem Ansprechverhalten der freilaufähnlich wirkenden Einrichtungen, die bei den konkret beschriebenen Ausführungsbeispielen mittels verzahnter Sperrklinken gebildet sind. Je feiner bzw. kleiner die Teilungen der Verzahnung dieser Sperrklinken ausgelegt werden kann, umso sensibler bzw. genauer kann die Verschleißnachstellung erfolgen. Eine feine Verzahnung ermöglicht kleine Nachstellschritte, wohingegen eine grobe Verzahnung größere Nachstellschritte bedingt. Es sind Ausführungsformen von Reibungskupplungen möglich, bei denen ein Verschleiß, insbesondere im Bereich der Reibbeläge, von 0,1 mm eine winkelmäßige Positionsveränderung der Hebelelemente bei eingerückter Reibungskupplung bewirkt, die ausreicht, einen Nachstellzyklus auszulösen. Somit werden bei einem Gesamtbelagverschleiß von ca. 2 mm über die Lebensdauer der Reibungskupplung ca. 20 Nachstellzyklen auftreten.

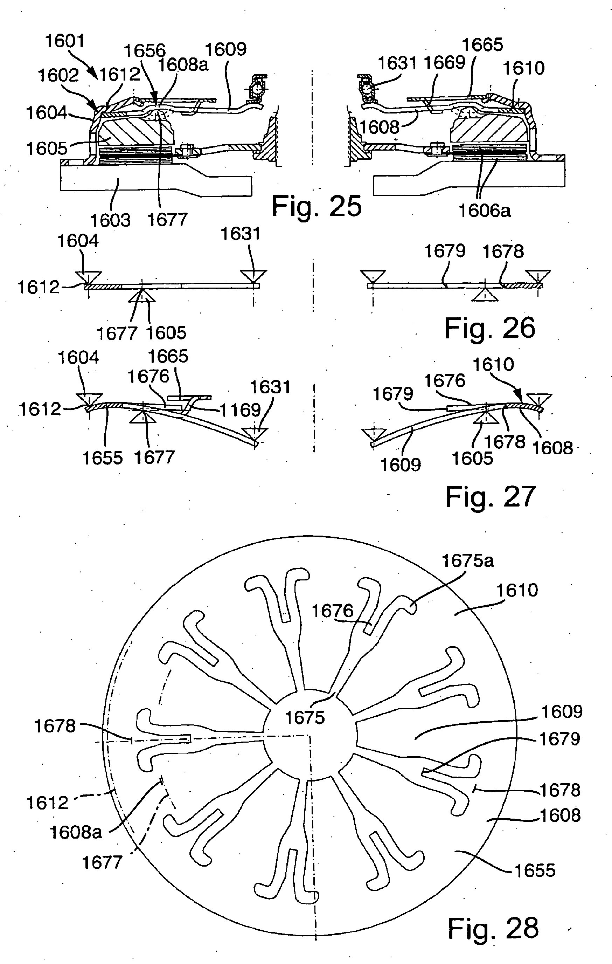

In Zusammenhang mit den Figuren 25 bis 28 wird im Folgenden die Ausgestaltung eines Kupplungsaggregates 1601 beschrieben, das eine verdrehbare Hebelanordnung 1608 und ein diese Verdrehung bewirkendes, in seiner Konizität federnd veränderbares scheibenartiges Element 1665 aufweist. Das Kupplungsaggregat 1665 hat also bezüglich seiner Funktion ähnliche Bauteile wie das Kupplungsaggregat 1001 und 1101.

Der prinzipielle Unterschied liegt jedoch darin, dass die Hebelanordnung 1608 und das scheibenartige Element 1665 derart miteinander wirkungsmäßig verbunden sind, dass für die über die Lebensdauer des Kupplungsaggregates 1601 erfolgende Verschleißnachstellung kein oder zumindest praktisch kein über den normal erforderlichen Schließweg notwendiger Nachstellüberweg erforderlich. Eine Verschleißnachstellung innerhalb des Kupplungsaggregates 1601 soll also lediglich aufgrund einer auf Verschleiß zurückzuführenden, winkelmäßigen Positionsveränderung der Hebelanordnung bzw. Bereichen dieser Hebelanordnung im eingerückten Zustand des Kupplungsaggregates 1601 erfolgen. Diese winkelmäßigen Positionsveränderungen sind bedingt durch die über die Lebensdauer des Kupplungsaggregates 1601 auftretende axiale Verlagerung der Anpressplatte 1605 in Richtung der Gegendruckplatte 1603 infolge des insbesondere an den Reibbelägen 1606a auftretenden axialen Verschleißes. Da die Hebelanordnung 1608 einerseits um die vom Kupplungsgehäuse 1604 getragene Schwenklagerung 1612 verschwenkbar ist und andererseits mit radial innerhalb der Schwenklagerung 1612 vorgesehenen Bereichen 1608a die Anpressplatte 1605 in Schließrichtung beaufschlagt, entsteht infolge der verschleißbedingten axialen Verlagerung der Anpressplatte 1605 eine größere winkelmäßige bzw. kegelstumpfförmige Verformung der Hebelanordnung 1608. Diese verschleißbedingte, zusätzliche Verformung des Hebelelementes 1608 wird auf das mit diesem wirkungsmäßig verbundene, scheibenartige Element 1665 übertragen. Diese zusätzliche Verformung des scheibenartigen Elementes 1665 bewirkt in ähnlicher Weise, wie dies in Zusammenhang mit den scheibenartigen Elementen 1065, 1165, 1165a, 1265 beschrieben wurde, ein radiales Zusammenziehen bzw. zumindest eine Außendurchmesserverringerung des scheibenartigen Elementes 1665, die bei ausreichendem Verschleiß eine Nachstellung beim Schließen der Kupplung auslöst und bei dem darauf folgenden Öffnen durch Verdrehen der Hebelanordnung 1608 bewirkt. Bei der in Figur 25 dargestellten Konstruktion ist in ähnlicher Weise, wie dies in Zusammenhang mit den vorangegangenen Figuren beschrieben wurde, hierfür eine Rampenanordnung 1656 zwischen der Hebelanordnung 1608 und der Anpressplatte 1605 vorgesehen. Bei dem Ausführungsbeispiel ist die Rampenanordnung 1656 einerseits durch einen unmittelbar in das Hebelelement 1608 eingeprägten Rampensatz und andererseits durch einen unmittelbar an die Anpressplatte 1605 angeformten Rampensatz gebildet. Die einzelnen Rampen erstrecken sich dabei in Umfangsrichtung und steigen in axialer Richtung an. Zweckmäßig ist es, wenn der Rampenwinkel in der Größenordnung zwischen 4° und 12° liegt. Zumindest einer der vorerwähnten Rampensätze könnte jedoch auch durch zumindest ein zwischengelegtes, ringförmiges Element gebildet sein. Hierfür könnte beispielsweise ein aus Blech hergestellter Ring Verwendung finden, der sich einerseits an der Anpressplatte 1605 abstützt und andererseits auf seiner dem Rampensatz der Hebelanordnung 1608 zugekehrten Seite ebenfalls einen entsprechend angepassten Raumpensatz aufweist.

Aus Figur 25 ist ersichtlich, dass das scheibenartige, elastische Nachstellelement 1665 auf der der Anpressplatte 1605 abgewandten Seite der Hebelanordnung 1608 angeordnet ist. Das elastisch verformbare, scheibenartige Element 1665 stützt sich radial außen verschwenkbar am Gehäuse 1604 ab. In ähnlicher Weise, wie dies in Zusammenhang mit den voran beschriebenen, scheibenartigen Elementen erläutert wurde, besitzt auch das scheibenartige Element 1665 über seinen Umfang betrachtet zumindest einen Trennschnitt bzw. einen entsprechend federnd nachgiebigen Bereich, der das vorerwähnte Zusammenziehen bzw. eine Außendurchmesserverkleinerung des scheibenartigen Elementes 1665 infolge einer Konizitätsveränderung ermöglicht. Das scheibenartige Element'1665 besitzt auch entsprechend wirksame Profilierungen, wie zum Beispiel Sperrklinken, welche mit vom Gehäuse 1604 getragenen Gegenprofilierungen zusammenwirken, um eine Verdrehung des scheibenartigen Elementes 1665 gegenüber dem Gehäuse 1604 zu bewirken. Es wird in diesem Zusammenhang auch auf die Ausgestaltung und Wirkungsweise der in Zusammenhang mit den anderen Figuren beschriebenen vergleichbaren Profilierungen und Gegenprofilierungen bzw. Sperrklinken verwiesen.

Die wirkungsmäßige Koppelung zwischen der Hebelanordnung 1608 und dem elastisch verformbaren, scheibenartigen Element 1665 erfolgt bei dem dargestellten Ausführungsbeispiel mittels Zungen 1669, die sich an Bereichen des die Hebelanordnung 1608 bildenden Bauteiles 1610 abstützen. Die Zungen 1669 sind bei dem dargestellten Ausführungsbeispiel einstückig mit dem scheibenartigen Element 1665 ausgebildet und im Bereich des Innenrandes dieses Elementes 1665 vorgesehen.

Die Hebelanordnung 1608 ist in Figur 28 in Draufsicht dargestellt. Das die Hebelanordnung 1608 bildende Bauteil 1610 besitzt einen äußeren ringartigen Körper 1655, von dem radial nach innen verlaufende Hebel 1609 ausgehen. Die Hebel 1609 sind bei dem Ausführungsbeispiel in Umfangsrichtung des Bauteils 1610 gleichmäßig verteilt angeordnet und durch schlitzartige Ausschnitte 1675 voneinander getrennt. Die Ausschnitte 1675 sind radial in Richtung des ringförmigen Grundkörpers 1655 betrachtet Y-artig ausgebildet, wobei die radial äußeren Bereiche 1675a der Y-artig ausgebildeten Ausschnitte in Umfangsrichtung verlaufen.

Die Ausschnitte 1675 sind derart ausgebildet, dass zwischen wenigstens zwei benachbarten Hebeln 1609 ein vom ringartigen Grundkörper 1655 ausgehender und radial nach innen verlaufender Vorsprung 1676 gebildet ist. Bei dem in Figur 28 dargestellten Ausführungsbeispiel ist ein derartiger Vorsprung 1676 jeweils zwischen benachbarten Hebeln bzw. Zungen 1609 vorhanden. Die Vorsprünge 1676 sind radial nach innen hin ebenfalls zungenförmig ausgebildet und dienen zur axialen Abstützung der in Zusammenhang mit Figur 25 beschriebenen Zungen 1669 des elastisch verformbaren, scheibenartigen Elementes 1665. In Zusammenhang mit Figur 25 und der linken Hälfte der Figur 27 ist ersichtlich, dass die Zungen 1669 die Zungen 1676 axial hintergreifen, wodurch eine axiale Verbindung zwischen dem scheibenartigen Element 1665 und der Hebelanordnung 1608 vorhanden ist. Durch diese Verbindung wird gewährleistet, dass eine winkelmäßige Verschwenkung der Hebelanordnung 1608 eine Verschwenkung bzw. Konizitätsveränderung des scheibenartigen Elementes 1665 bewirkt.

In den Figuren 26 und 27 sind vereinfacht bzw. schematisch die Hebelanordnung 1608 sowie die Beaufschlagungs- bzw. Abstützbereiche am Gehäuse 1604 an der Anpressplatte 1605 und am Betätigungselement 1631 dargestellt. Wie aus Figur 25 zu entnehmen ist, ist bei dem dargestellten Ausführungsbeispiel dieses Betätigungselement durch ein Betätigungslager 1631 gebildet. Über dieses Betätigungslager 1631 wird zumindest ein Teil der zum Übertragen des Drehmomentes erforderlichen Kupplungsschließkraft auf die radial inneren Bereiche der Hebelanordnung 1608 eingeleitet.

In Figur 26 ist schematisch die Einbaulage der Hebelanordnung 1608 bei geöffneter Reibungskupplung 1602 dargestellt.

In Figur 27 ist schematisch der Verspannungszustand der Hebelanordnung 1608 bei geschlossener Reibungskupplung dargestellt. Die dargestellte Durchbiegung der Hebelanordnung 1608 ist dabei jedoch übertrieben dargestellt, um die Wirkungsweise der Hebelanordnung 1608 in Verbindung mit dem scheibenartigen Element 1165 verständlicher zu gestalten.

Bei so genannten zugedrückten Kupplungen, also bei Kupplungen, bei denen die für die Übertragung eines Drehmomentes erforderliche Anpresskraft zumindest teilweise von außen in die Kupplung eingeleitet wird, ist es für viele Anwendungsfälle zweckmäßig, wenn bei Verwendung einer Hebelanordnung zur Kupplungsbetätigung die die Hebelanordnung bildenden Hebelelemente eine gewisse elastische Durchbiegung bzw. Verformung durch die Schließkraft erfahren. Eine derartige Durchbiegung der einzelnen Hebelelemente, zum Beispiel 1609, ermöglicht über den Einrückweg der Reibungskupplung das übertragbare Drehmoment hinreichend genau aufzulösen. Es findet also kein schlagartiger Aufbau des Drehmomentes statt, sondern es kann über den Verformungsweg der Hebelelemente und der evtl. vorhandenen Reibbelagfederung ein progressiver Abbau bzw. Aufbau des von der Reibungskupplung 1602 übertragbaren Drehmomentes erfolgen. Zweckmäßig ist es, wenn zwischen den Reibbelägen 1606a der entsprechenden Reibungskupplung noch zusätzlich eine so genannte Belagfederung mittels zum Beispiel Federsegmenten vorhanden ist. Eine derartige Belagfederung ermöglicht ebenfalls einen progressiven Auf- bzw. Abbau des von der Reibungskupplung übertragbaren Drehmomentes während der Öffnung bzw. Schließung. Je nach Anwendungsfall kann der Anteil der durch die elastische Durchbiegung der Hebelelemente 1609 und der zwischen den Reibbelägen 1606a vorgesehenen Belagfederung bewirkten Progressivität des Auf- bzw. Abbaues der Drehmomentübertragungskapazität der Reibungskupplung unterschiedlich groß sein.

Da die Verschleißnachstellung innerhalb des Kupplungsaggregates 1601 so nah wie möglich an dem tatsächlich aufgetretenen Verschleiß liegen sollte, muss gewährleistet werden, dass das als Verschleißsensor und Auslöseelement für eine Verschleißnachstellung dienende, scheibenartige Element 1165 eine in Korrelation mit dem tatsächlich aufgetretenen Verschleiß stehende Verschwenkbewegung erfährt, die zumindest im Wesentlichen unabhängig ist von den störenden Durchbiegungen des ringartigen Grundkörpers 1655 und der Hebelelemente 1609. Die vorerwähnte Durchbiegung ist zwar ein Maßstab für die Kraft, mit der die Hebelelemente 1609 in Schließrichtung beaufschlagt werden, jedoch kann aufgrund dieser Durchbiegung nicht immer eine ausreichend genaue Ermittlung des tatsächlich aufgetretenen Verschleißes erfolgen.

Um trotz der vorerwähnten Durchbiegungen dennoch eine ausreichend präzise Messung bzw. Ermittlung des tatsächlich aufgetretenen Verschleißes zu ermöglichen, wird erfindungsgemäß vorgeschlagen, aus dem das scheibenartige Element 1665 bildende Ausgangsmaterial, wie insbesondere Stahlblech, Bereiche herauszuformen, die zumindest Abschnitte besitzen, die von den vorbeschriebenen Durchbiegungen des ringartigen Grundkörpers 1655 und der Hebelelemente 1609 praktisch unabhängig sind. Diese Bereiche sind bei dem dargestellten Ausführungsbeispiel gemäß den Figuren 25 bis 28 durch die Zungen 1676 gebildet. Diese Zungen sind, wie bereits beschrieben, in axialer Richtung bewegungsmäßig mit dem scheibenartigen Element 1665 verbunden. Die Zungen 1676 stehen also bezüglich ihrer Bewegungen nicht direkt mit den eigentlichen, ebenfalls als Zungen ausgebildeten, Hebelelementen 1609 in Verbindung. Wie bereits erwähnt, sind die Zungen 1676 radial außen direkt mit dem Rand bzw. dem ringförmigen Grundkörper 1655 des tellerfederartig ausgebildeten, ringartigen Bauteiles 1610 verbunden. In vorteilhafter Weise sind diese Zungen 1676 derart in Bezug auf die übrigen Bereiche des ringartigen Bauteiles 1610 ausgerichtet, dass sie nicht zur Anlage an der Anpressplatte 1605 oder am Gehäuse 1604 kommen. Die Zungen 1676 sollen also vorzugsweise nicht an den von der Anpressplatte 1605 getragenen Abstützbereichen 1677 für die Hebelelemente 1609 anliegen.

Bei dem dargestellten Ausführungsbeispiel entspricht die Anzahl der als Verschleißfühler dienenden Zungen 1676 der Anzahl an Hebelelementen 1609.

Die radiale Anbindestelle 1678 der Zungen 1676 mit dem ringartigen Grundkörper 1655 ist derart angeordnet, dass das jeweilige innere Ende 1679 der Zungen 1676 praktisch unabhängig von der beim Schließen der Reibungskupplung 1602 auftretenden Durchbiegung der Hebelelemente 1609 und des ringartigen Grundkörpers 1655 ist. Eine Veränderung der Höhe der Zungenabschnitte 1679 soll also praktisch nur infolge eines auftretenden Verschleißes erfolgen.

Um dies zu gewährleisten, wird die Anbindungsstelle 1678 entsprechend der Biegelinie bzw. dem Biegeverhalten des ringartigen Bauteiles 1610 angeordnet.

Die optimale Anbindungsstelle 1678 liegt - in radialer Richtung betrachtet - innerhalb der Stelle mit der maximalen Durchbiegung zwischen den beiden Auflagedurchmessern 1612 und 1677 am Gehäuse 1604 und an der Anpressplatte 1605. Dieser Sachverhalt ist insbesondere aus der linken Seite der Figur 28 ersichtlich. Auch aus den Figuren 26 und 27 ist erkennbar, dass trotz der in Figur 27 vorhandenen Durchbiegung des ringartigen Bauteiles 1610 die radial inneren Zungenenden 1679 sich nicht bzw. praktisch nicht in axialer Richtung verlagert haben. Dies ist darauf zurückzuführen, dass die Zungen 1676 unter Berücksichtigung der Biegelinie des ringartigen Bauteiles 1610 derart ausgestaltet sind, dass trotz einer auch an den Zungen 1676 auftretenden geringen Schwenkbewegung die inneren Zungenenden 1679 eine praktisch konstante, axiale Position beibehalten.

### Bezugszeichenliste

- 1: Kupplungsaggregat
- 2: Reibungskupplung
- 3: Schwungrad; Gegendruckplatte
- 4: Gehäuse
- 5: Anpressplatte
- 6: Kupplungsscheibe
- 7: Getriebeeingangswelle
- 8: Hebelanordnung
- 9: Hebelelemente
- 10: ringartiges Bauteil
- 11: Verbindungselemente
- 12: Schwenklagerung
- 13: ringförmiger Bereich
- 14: Nocken
- 15: Schlitze
- 16: umfangsmäßige Erweiterungen
- 17: Anschläge
- 18: Bereich für Durchmesserveränderung
- 19: Trennschlitz
- 20: freilaufähnliche Einrichtungen
- 21: freilaufähnliche Einrichtungen
- 22: elastisches bzw. federndes Element
- 23: elastisches bzw. federndes Element
- 24: Profilierungen
- 25: Profilierungen
- 26: Gegenprofilierungen
- 27: Gegenprofilierungen
- 28: Umfangsrichtung
- 29: durchgehendes, verzahntes Segment
- 30: Nachstelleinrichtung
- 31: Bestandteil eines Aktuatorsystems; Betätigungselement
- 32: Schließrichtung
- 40: Verschwenkung
- 41: Abstand
- 42, 43: äußere Bereiche
- 44, 45: radiale Abstützbereiche
- 109: Hebelelemente
- 110: Hebelfeder, ringartiges Bauteil
- 115: Schlitze
- 116: Erweiterungen
- 117: Anschläge
- 119: Schlitz
- 146: Anschlag
- 147: Anprägungen
- 201: Kupplungsaggregat
- 202a,: Reibungskupplungen
- 202b: Reibungskupplungen
- 203: Gegendruckplatte
- 204: Kupplungsgehäuse
- 205a: Anpressplatte
- 205b: Anpressplatte
- 206a: Kupplungsscheibe
- 206b: Kupplungsscheibe
- 209a: Hebelelemente
- 209b: Hebelelemente
- 209c: radial äußere Bereiche
- 210a: ringartiges Bauteil
- 210b: ringartiges Bauteil
- 212a: Verschwenklagerung
- 212b: ringartiger Abstützbereich; Verschwenkzone
- 214a: Zwischenring
- 231a: Betätigungslager
- 231b: Betätigungselement
- 234: tellerförmige Verbindungsscheibe
- 234a: axial sich erstreckender Bereich
- 235a: Zungenbereiche
- 235b: Zungenbereiche
- 236: Durchmesserbereich
- 237: Verbindungselement
- 309: Hebelelemente
- 310: Hebelfeder
- 317: Anschläge
- 319: Schlitz
- 324: Sperrzähne
- 324a: Hebelbereiche
- 325: Sperrzähne
- 325a: Hebelbereiche
- 347: Rampen
- 350: Arme
- 351: Anschlagbereiche
- 409: Hebelelemente
- 410: Hebelfeder
- 422: elastische Bereiche
- 423: elastische Bereiche
- 424: Verzahnungen
- 425: Verzahnungen
- 452: abgewinkelte Bereiche
- 453: Anformung
- 454: Zentrierfortsatz
- 509: Hebelelemente
- 510: Hebelfeder
- 519: Schlitz
- 525: ringförmiges Element
- 555: ringförmiges Zusatzelement
- 556: axiale Ansätze
- 557: Durchmesserveränderung
- 609: Hebelelemente
- 610: Hebelfeder
- 618: Bereich
- 619: Trennschlitz
- 622: Element zur Sperr- bzw. Freilaufeinrichtung
- 623: Element zur Sperr- bzw. Freilaufeinrichtung
- 660: Sperreinrichtung
- 661: Sperrbereich

- 662: federndes Bauteil
- 663: Hebelarm
- 664: Hebelarm
- 665: Übergangsbereich
- 666: Ausleger
- 667: Ausleger
- 668: Federbereich
- 669: freies Ende
- 670: Abkröpfungen
- 701: Kupplungsaggregat
- 702: Reibungskupplung
- 703: Gegendruckplatte
- 704: Gehäuse
- 705: Anpressplatte
- 705a: Anpressplatte
- 706: Kupplungsscheibe
- 706a: Kupplungsscheibe
- 709: Hebelelemente
- 710: ringartiges Bauteil
- 712: Schwenklagerung
- 714: Nocken
- 720: freilaufähnliche Einrichtung
- 721: freilaufähnliche Einrichtung
- 722: Abschnitte
- 723: Abschnitte
- 724: Sperrklinke
- 725: Sperrklinke
- 726: Gegenprofilierung
- 727: Gegenprofilierung
- 731: Bestandteil eines Betätigungselementes
- 732: Pfeil
- 732a: Pfeil
- 742: ringförmiger Bereich
- 755: ringförmiger Bereich
- 756: Rampenanordnung
- 757: Rotationsachse
- 758: Zuganker
- 759: Verbindungsstelle
- 760: federndes Element
- 761: Verschwenkweg
- 762: Betätigungsüberweg
- 810: ringartiges Bauteil
- 824: Sperrklinke
- 825: Sperrklinke
- 842: äußere Bereiche
- 842a: sektorförmiger Bereich
- 842b: Bereich
- 855: innere Bereiche
- 858: Zuganker
- 860: mäanderförmiger Bereich
- 863: Verbindungsstelle
- 864: Enden
- 865: Enden
- 909: Hebelelemente
- 910: ringförmiges Bauteil
- 916: Energiespeicher
- 924: Sperrklinke
- 925: Sperrklinke
- 942: freigeschnittener Außenrand
- 942a: Bereich
- 942b: Bereich
- 942c: Sektoren
- 943: Trennstelle
- 955: ringförmiger Bereich
- 958: Zuganker
- 958a: U- bzw. V-förmiger Bereich
- 960: Energiespeicher
- 962: Abstützbereich
- 963: Abstützbereich
- 1001: Kupplungsaggregat
- 1002: Reibungskupplung
- 1003: Gegendruckplatte
- 1004: Kupplungsgehäuse
- 1005: Anpressplatte
- 1006: Kupplungsscheibe
- 1006a: Reibbeläge
- 1008: Hebel
- 1008a: Bereich
- 1009: Hebelelement
- 1012: Schwenklagerung
- 1031: Betätigungsorgan
- 1056: Nachstelleinrichtung
- 1065: scheibenförmiges Element
- 1101: Kupplungsaggregat
- 1102a: Reibungskupplung
- 1102b: Reibungskupplung
- 1103: Gegendruckplatte
- 1104: abstützendes Bauteil
- 1105a: Anpressplatte
- 1105b: verlagerbare Anpressplatte
- 1108: Hebelanordnung
- 1108a: Hebelanordnung
- 1137: Verbindungselement
- 1137a: axiale Bereiche
- 1137b: Vernietungen
- 1165: scheibenartiges Element
- 1165a: scheibenartiges Element
- 1166: Getriebeeingangswelle
- 1167: Kugellager
- 1169: Drehschwingungsdämpfer
- 1170: Eingangsteil
- 1171: Motorabtriebswelle
- 1172: flanschartiges Ausgangsteil
- 1173: Steckverbindung
- 1174: Bauteil
- 1219: Trennstelle
- 1222: elastische Stege
- 1223: elastische Stege
- 1224: Sperrklinke
- 1225: Sperrklinke
- 1265: scheibenartiges Element
- 1265a: Grundkörper
- 1267: Ausschnitte
- 1268: Beaufschlagungsbereiche
- 1269: angeformte Zungen
- 1269a: Zunge
- 1270: Bereich
- 1271: Betätigungsweg
- 1272: mitlaufender Lagerring
- 1273: Antriebszunge
- 1358: elastischer Bereich
- 1365: scheibenartiges Element
- 1365a: Grundkörper
- 1465: scheibenartiges Element
- 1465a: ringförmiger Grundkörper
- 1525: scheibenartiges Element
- 1558: federnder Bereich
- 1565: scheibenartiges Element
- 1601: Kupplungsaggregat
- 1602: Reibungskupplung
- 1603: Gegendruckplatte
- 1604: Kupplungsgehäuse
- 1605: Anpressplatte
- 1606a: Reibbeläge
- 1608: verdrehbare Hebelanordnung
- 1608a: Bereiche
- 1609: Hebel
- 1610: Bauteil
- 1612: Schwenklagerung
- 1631: Betätigungslager
- 1655: ringartiger Körper
- 1656: Rampenanordnung
- 1665: scheibenartiges Bauteil
- 1669: Zungen
- 1675: Ausschnitte
- 1675a: Ausschnitte
- 1676: Vorsprung
- 1677: Abstützbereiche
- 1678: Anbindungsstelle
- 1679: inneres Ende

## Patentansprüche

1. Reibungskupplung mit einem Gehäuse (4, 1004) und einer mit diesem drehfest, jedoch axial begrenzt verlagerbar verbundenen Anpressplatte (5, 1005) wobei zwischen Gehäuse und Anpressplatte eine verschwenkbare Hebelanordnung (8, 1008) vorgesehen ist, mittels derer die Reibungskupplung betätigbar ist, die Hebelanordnung eine Mehrzahl von ringartig angeordneten Hebelelementen (9, 1009) umfasst, **dadurch gekennzeichnet, dass** ein ringartiges Bauteil (10, 1065) der Reibungskupplung durch Verschwenken der Hebelanordnung (8, 1008) in seiner Konizität veränderbar ist, wobei durch Konizitätsveränderungen eine Durchmesservergrößerung und -verringerung des ringartigen Bauteils (10, 1065) erzeugt werden kann
- wobei das ringartige Bauteil (10, 1065) über den Umfang betrachtet einen die Durchmesserveränderungen durch Aufweiten und Verschmälern ermöglichenden Bereiche (18) aufweist,
- wobei in Umfangsrichtung des ringartigen Bauteils betrachtet beidseits dieses Bereiches (18) jeweils eine in Umfangsrichtung wirksame Freilaufeinrichtung (20, 21) vorgesehen ist, die beide in die gleiche Drehrichtung eine Sperrwirkung aufweisen,
- die Freilaufeinrichtungen zwischen dem ringartigen Bauteil (10, 1065) und einem weiteren Bauteil (4) 1004 der Reibungskupplung wirksam sind,
- und durch das Zusammenwirken der beiden Freilaufeinrichtungen (20, 21) in Kombination mit Konizitätsveränderungen des ringartigen Bauteils (10, 1065) eine Relativverdrehung zwischen dem ringartigen Bauteil (10, 1065) und dem weiteren Bauteil (4, 1004) erzeugt wird.

2. Reibungskupplung nach Anspruch 1, **dadurch gekennzeichnet, dass** die Hebelanordnung eine Mehrzahl von ringartig angeordneten Hebelelementen(9) umfasst, die zur Bildung eines ringartigen Bauteils (10) miteinander verbunden sind.

3. Reibungskupplung nach Anspruch 1 oder 2, **dadurch gekennzeichnet, dass** der die Durchmesserveränderungen des ringartigen Bauteils (10, 1265) ermöglichende Bereich durch einen radial verlaufenden, zwischen den Freilaufeinrichtungen im ringartigen Bauteil vorgesehenen Spalt (19, 1219) gebildet ist.

4. Reibungskupplung nach einem der Ansprüche 1 bis 3, **dadurch gekennzeichnet, dass** das ringartige Bauteil (10, 1065, 1265) einstückig ausgebildet ist.

5. Reibungskupplung nach wenigstens einem der vorhergehenden Ansprüche, **dadurch gekennzeichnet, dass** die Hebelelemente (9) über einstückig mit diesen ausgebildeten Verbindungsbereichen (11) gekoppelt sind.

6. Reibungskupplung nach Anspruch 5, **dadurch gekennzeichnet, dass** die Verbindungsbereiche (11) die Hebelelemente (9) derart miteinander verbinden, dass das **dadurch** gebildete, ringartige Bauteil tellerfederähnlich in seiner Konizität veränderbar ist.

7. Reibungskupplung nach wenigstens einem der vorhergehenden Ansprüche, **dadurch gekennzeichnet, dass** das ringartige Bauteil (10, 1065, 1265) federnd ist.

8. Reibungskupplung nach wenigstens einem der vorhergehenden Ansprüche, **dadurch gekennzeichnet, dass** das ringartige Bauteil (10, 1065, 1265) Bestandteil einer Verschleißausgleichsvorrichtung (30) ist.

9. Reibungskupplung nach wenigstens einem der vorhergehenden Ansprüche, **dadurch gekennzeichnet, dass** zumindest die Hebelelemente (9) in Umfangsrichtung verlaufende, sich axial erhebende Auflauframpen aufweisen, die Bestandteil einer Verschleißausgleichsvorrichtung (30) sind.

10. Reibungskupplung nach wenigstens einem der vorhergehenden Ansprüche, **dadurch gekennzeichnet, dass** die Anpressplatte (5) und/oder das Gehäuse (4) Gegenauflauframpen aufweist, welche mit von der Hebelanordnung (8) getragenen Auflauframpen zur Bildung einer Nachstelleinrichtung zusammenwirken.

11. Reibungskupplung nach wenigstens einem der vorhergehenden Ansprüche, **dadurch gekennzeichnet, dass** die Freilaufeinrichtungen (20, 21) ineinander greifende Profilierungen (24, 25) und Gegenprofilierungen (26, 27) aufweisen, die in die eine Relativverdrehrichtung eine Sperrwirkung besitzen, in die andere Relativverdrehrichtung jedoch eine Nachstellung ermöglichen.

12. Reibungskupplung nach Anspruch 11, **dadurch gekennzeichnet, dass** die Profilierungen (24, 25) und Gegenprofilierungen (26, 27) federnd verspannt sind.

13. Reibungskupplung nach Anspruch 11 oder 12, **dadurch gekennzeichnet, dass** die Profilierungen (24, 25) und Gegenprofilierungen (26, 27) durch Zähne gebildet sind.

14. Reibungskupplung nach wenigstens einem der Ansprüche 10 bis 13, **dadurch gekennzeichnet, dass** die Profilierungen einstückig mit dem ringartigen Bauteil (10) ausgebildet sind.

15. Reibungskupplung nach mindestens einem der Ansprüche 11 bis 14, **dadurch gekennzeichnet, dass** die Profilierungen und/oder die Gegenprofilierungen von einem als Federstab ausgebildeten Bereich (22, 23) getragen sind.

16. Reibungskupplung nach Anspruch 15, **dadurch gekennzeichnet, dass** der Federstab (22, 23) sich in Umfangsrichtung erstreckt und zumindest radial federnd ist.

17. Reibungskupplung nach wenigstens einem der Ansprüche 1 bis 16, **dadurch gekennzeichnet, dass** das ringförmige Bauteil (10, 1065, 1265) aufgrund seiner Federeigenschaften in eine kegelstumpfförmig aufgestellte Lage tendiert.

18. Reibungskupplung nach Anspruch 17, **dadurch gekennzeichnet, dass** die kegelstumpfförmig aufgestellte Lage einem geöffneten Zustand der Reibungskupplung (1) entspricht.

19. Reibungskupplung nach wenigstens einem der Ansprüche 1 bis 18, **dadurch gekennzeichnet, dass** die Hebelanordnung (8, 1608) über eine Betätigungseinrichtung (731, 1031, 1631) verschwenkbar sind.

20. Reibungskupplung nach Anspruch 19, **dadurch gekennzeichnet, dass** die Betätigungseinrichtung (731, 1031, 1631) zumindest ein Teil der zur Drehmomentübertragung erforderlichen Schließkraft der Reibungskupplung aufbringt.

21. Reibungskupplung nach Anspruch 19 oder 20, **dadurch gekennzeichnet, dass** mittels der Betätigungseinrichtung (731) sowohl ein zum Ein- und Ausrücken der Reibungskupplung erforderlicher, normaler Betätigungsweg (761) auf die Hebelelemente (709) übertragbar ist, als auch ein in Abhängigkeit eines ermittelten Verschleißes durchfahrbarer, über den normalen Einrück- oder Ausrückbetätigungsweg (761) hinausgehender Nachstellweg (762).

22. Reibungskupplung nach einem der Ansprüche 1 bis 21, **dadurch gekennzeichnet, dass** die Reibungskupplung (701) eine zumindest den Verschleiß der Reibbeläge (706a) einer mit der Reibungskupplung zusammenwirkenden Kupplungsscheibe (706) kompensierende, das ringartige Bauteil (710) umfassende Ausgleichsvorrichtung besitzt, wobei zum normalen Öffnen und Schließen der Reibungskupplung (701) die Hebelanordnung innerhalb eines im Wesentlichen konstanten Verschwenkbereiches (761) bewegbar ist und die durch die Ausgleichsvorrichtung erzeugbare Nachstellung durch eine Schwenkbewegung der Hebelanordnung (709) bewirkt wird, welche in Schließ- oder in Öffnungsrichtung der Reibungskupplung betrachtet, größer ist als der normale Verschwenkbereich (761) und die Relatiwerdrehung bewirkt.

## Claims

1. A friction clutch, having a housing (4, 1004) and a pressing plate (5, 1005) which is connected to the housing in a connection that is rotationally fixed but capable of limited axial movement, there being a lever arrangement (8, 1008) capable of swiveling provided between the housing and the pressing plate, by means of which the friction clutch is operable, the lever arrangement including a plurality of lever elements (9, 1009) in a ring-like arrangement, **characterized in that** the conicity of a ring-like component (10, 1065) of the friction clutch is changeable by swiveling the lever arrangement (8, 1008), it being possible through changes in conicity to produce an enlargement and reduction of the diameter of the ring-like component (10, 1065),
- where the ring-like component (10, 1065), viewed over its circumference, has a zone (18) that makes the changes in diameter possible by expanding and contracting,
- where on each side of this zone (18), viewed in the circumferential direction of the ring-like component, there are free-moving devices (20, 21) that act in the circumferential direction, both of which have a blocking effect in the same direction of rotation,
- the free-moving devices are operative between the ring-like component (10, 1065) and an additional component (4) 1004 of the friction clutch,
- and a relative torsion is produced between the ring-like component (10, 1065) and the additional component (4, 1004) by the interaction of the two free-moving devices (20, 21) in combination with conicity changes of the ring-like component (10, 1065).

2. The friction clutch according to Claim 1, **characterized in that** the lever arrangement includes a plurality of lever elements (9) in a ring-like arrangement, which are connected with each other to form a ring-like component (10).

3. The friction clutch according to Claim 1 or 2, **characterized in that** the zone that makes the diameter changes of the ring-like component (10, 1265) possible is formed by a radially running gap (19, 1219) provided between the free-moving devices in the ring-like component.

4. The friction clutch according to one of Claims 1 through 3, **characterized in that** the ring-like component (10, 1065, 1265) is made in a single piece.

5. The friction clutch according to one of the preceding claims, **characterized in that** the lever elements (9) are coupled through connecting zones (11) that are formed in a single piece with them.

6. The friction clutch according to Claim 5, **characterized in that** the connecting zones (11) connect the lever elements (9) with each other in such a way that the ring-like component formed thereby is changeable in its conicity similar to a diaphragm spring.

7. The friction clutch according to at least one of the preceding claims, **characterized in that** the ring-like component (10, 1065, 1265) is springy.

8. The friction clutch according to at least one of the preceding claims, **characterized in that** the ring-like component (10, 1065, 1265) is part of a wear compensation device (30).

9. The friction clutch according to at least one of the preceding claims, **characterized in that** at least the lever elements (9) have run-up ramps running in the circumferential direction and rising axially, which are part of a wear compensation device (30).

10. The friction clutch according to at least one of the preceding claims, **characterized in that** the pressing plate (5) and/or the housing (4) have opposing run-up ramps which interact with run-up ramps supported by the lever arrangement (8) to form an adjusting apparatus.

11. The friction clutch according to at least one of the preceding claims, **characterized in that** the free-moving devices (20, 21) have mutually engaging profiles (24, 25) and counter-profiles (26, 27) that have a blocking effect in the one relative torsional direction, but enable an adjustment in the other relative torsional direction.

12. The friction clutch according to Claim 11, **characterized in that** the profiles (24, 25) and counter-profiles (26, 27) are under spring tension.

13. The friction clutch according to Claim 11 or 12, **characterized in that** the profiles (24, 25) and counter-profiles (26, 27) are formed by teeth.

14. The friction clutch according to at least one of Claims 10 through 13, **characterized in that** the profiles are formed in a single storey with the ring-like component (10).

15. The friction clutch according to at least one of Claims 11 through 14, **characterized in that** the profiles and/or the counter-profiles are supported by an area (22, 23) in the form of a spring rod.

16. The friction clutch according to Claim 15, **characterized in that** the spring rod (22, 23) extends in the circumferential direction and is springy in at least the radial direction.

17. The friction clutch according to at least one of Claims 1 through 16, **characterized in that** the ring-shaped component (10, 1065, 1265) tends to an upright position in the form of a truncated cone due to its spring properties.

18. The friction clutch according to Claim 17, **characterized in that** the upright position in the form of a truncated cone corresponds to a disengaged state of the friction clutch (1).

19. The friction clutch according to at least one of Claims 1 through 18, **characterized in that** the lever arrangement (8, 1608) can be swiveled by means of an activating device (731, 1031, 1631).

20. The friction clutch according to Claim 19, **characterized in that** the activating device (731, 1031, 1631) supplies at least part of the engaging force required by the friction clutch to transmit torque.

21. The friction clutch according to Claim 19 or 20, **characterized in that** it is possible by means of the activating device (731) to transfer to the lever elements (709) both a normal activating travel (761) needed to engage and disengage the friction clutch and an adjustment travel (762) in excess of the normal engaging or disengaging activation travel (761), which is traversable depending on a determination of wear.

22. The friction clutch according to one of Claims 1 through 21, **characterized in that** the friction clutch (701) has a compensating device including the ring-like component (710), that compensates at least for the wear of the friction linings (706a) of a clutch disk (706) that works together with the friction clutch, where the lever arrangement is movable within an essentially constant swiveling range (761) for normal disengaging and engaging of the friction clutch (701), and the adjustment that is producible by the compensating device is effected by a swiveling motion of the lever arrangement (709), which is greater than the normal swiveling range (761) when viewed in the engaging or disengaging direction of the friction clutch, and results in the relative torsion.

## Revendications

1. Embrayage à friction comprenant un carter (4, 1004) et un plateau de pression (5, 1005) relié, solidaire en rotation, à ce carter, mais en étant mobile axialement de façon limitée, où il est prévu, entre le carter et le plateau de pression, un ensemble de leviers pivotant (8, 1008), au moyen duquel l'embrayage à friction peut être actionné, l'ensemble de leviers comprenant une pluralité d'éléments à leviers (9, 1009) disposés de façon annulaire,
**caractérisé en ce qu'**une pièce de structure (10, 1065), de forme annulaire, de l'embrayage à friction peut être modifiée dans sa conicité par pivotement de l'ensemble de leviers (8, 1008), où une augmentation et une diminution du diamètre de la pièce de structure (10, 1065) de forme annulaire peuvent être produites par des modifications de la conicité,
- où la pièce de structure (10, 1065), de forme annulaire, présente, en regardant sur la circonférence, une zone (18) rendant possibles les modifications de diamètre, par élargissement et par rétrécissement,
- où, en regardant dans la direction circonférentielle de la pièce de structure de forme annulaire, il est prévu, des deux côtés de cette zone (18), à chaque fois un dispositif à roue libre (20, 21) efficace dans la direction circonférentielle, dispositifs à roue libre qui présentent tous les deux un effet de blocage dans la même direction de rotation,
- les dispositifs à roue libre sont efficaces entre la pièce de structure (10, 1065) de forme annulaire, et une autre pièce de structure (4, 1004) de l'embrayage à friction,
- et, par l'action conjuguée des deux dispositifs à roue libre (20, 21), de façon combinée avec des modifications de la conicité de la pièce de structure (10, 1065) de forme annulaire, est produite une torsion relative entre la pièce de structure (10, 1065) de forme annulaire et l'autre pièce de structure (4, 1004).

2. Embrayage à friction selon la revendication 1, **caractérisé en ce que** l'ensemble de leviers comprend une pluralité d'éléments à leviers (9) disposés de façon annulaire, éléments à leviers qui sont reliés entre eux pour la formation d'une pièce de structure (10) de forme annulaire.

3. Embrayage à friction selon la revendication 1 ou 2, **caractérisé en ce que** la zone rendant possibles les modifications de diamètre de la pièce de structure (10, 1265) de forme annulaire est formée par un intervalle (19, 1219) s'étendant radialement et prévu dans la pièce de structure de forme annulaire, entre les dispositifs à roue libre.

4. Embrayage à friction selon l'une quelconque des revendications 1 à 3, **caractérisé en ce que** la pièce de structure (10, 1065, 1265) de forme annulaire est configurée en formant une seule et même pièce.

5. Embrayage à friction selon au moins l'une quelconque des revendications précédentes, **caractérisé en ce que** les éléments à leviers (9) sont couplés par des zones de liaison (11) configurées en formant une seule et même pièce avec ces éléments à leviers.

6. Embrayage à friction selon la revendication 5, **caractérisé en ce que** les zones de liaison (11) relient les éléments à leviers (9) entre eux, de manière telle que la pièce de structure de forme annulaire, formée par ces éléments à leviers, puisse être modifiée dans sa conicité, à la façon d'une rondelle ressort.

7. Embrayage à friction selon au moins l'une quelconque des revendications précédentes, **caractérisé en ce que** la pièce de structure (10, 1065, 1265), de forme annulaire, fait ressort.

8. Embrayage à friction selon au moins l'une quelconque des revendications précédentes, **caractérisé en ce que** la pièce de structure (10, 1065, 1265), de forme annulaire, fait partie d'un dispositif de rattrapage d'usure (30).

9. Embrayage à friction selon au moins l'une quelconque des revendications précédentes, **caractérisé en ce qu'**au moins les éléments à leviers (9) présentent des rampes inclinées s'étendant dans la direction circonférentielle et s'élevant axialement, rampes inclinées qui font partie d'un dispositif de rattrapage d'usure (30).

10. Embrayage à friction selon au moins l'une quelconque des revendications précédentes, **caractérisé en ce que** le plateau de pression (5) et / ou le carter (4) présente des contre-rampes inclinées qui, pour la formation d'un dispositif de rattrapage, agissent de manière conjuguée avec des rampes inclinées supportées par l'ensemble de leviers (8).

11. Embrayage à friction selon au moins l'une quelconque des revendications précédentes, **caractérisé en ce que** les dispositifs à roue libre (20, 21) présentent des profils (24, 25) et des contre-profils (26, 27) s'engrenant, qui, dans une direction de torsion relative, ont un effet de blocage mais, dans l'autre direction de torsion relative, rendent possible un rattrapage.

12. Embrayage à friction selon la revendication 11, **caractérisé en ce que** les profils (24, 25) et contre-profils (26, 27) sont déformés en faisant ressort.

13. Embrayage à friction selon la revendication 11 ou 12, **caractérisé en ce que** les profils (24, 25) et contre-profils (26, 27) sont formés par des dents.

14. Embrayage à friction selon au moins l'une quelconque des revendications 10 à 13, **caractérisé en ce que** les profils sont configurés en formant une seule et même pièce avec la pièce de structure (10) de forme annulaire.

15. Embrayage à friction selon au moins l'une quelconque des revendications 11 à 14, **caractérisé en ce que** les profils et / ou les contre-profils sont supportés par une zone (22, 23) configurée comme une barre à ressort.

16. Embrayage à friction selon la revendication 15, **caractérisé en ce que** la barre à ressort (22, 23) s'étend dans la direction circonférentielle et fait ressort au moins dans le sens radial.

17. Embrayage à friction selon au moins l'une quelconque des revendications 1 à 16, **caractérisé en ce que** la pièce de structure (10, 1065, 1265) de forme annulaire a tendance, en raison de ses propriétés d'élasticité, à prendre une position en forme de tronc de cône.

18. Embrayage à friction selon la revendication 17, **caractérisé en ce que** la position en forme de tronc de cône correspond à un état ouvert de l'embrayage à friction (1).

19. Embrayage à friction selon au moins l'une quelconque des revendications 1 à 18, **caractérisé en ce que** l'ensemble de leviers (8, 1608) peut pivoter par un dispositif de commande (731, 1031, 1631).

20. Embrayage à friction selon la revendication 19, **caractérisé en ce que** le dispositif de commande (731, 1031, 1631) applique au moins une partie de la force de fermeture de l'embrayage à friction, nécessaire pour la transmission de couple.

21. Embrayage à friction selon la revendication 19 ou 20, **caractérisé en ce que**, au moyen du dispositif de commande (731), est transmissible aux éléments à leviers (709), aussi bien une course de commande normale (761) nécessaire pour l'embrayage et le débrayage de l'embrayage à friction, qu'une course de rattrapage (762) parcourue en fonction d'une usure déterminée, allant au-delà de la course de commande normale (761) d'embrayage ou de débrayage.

22. Embrayage à friction selon l'une quelconque des revendications 1 à 21, **caractérisé en ce que** l'embrayage à friction (701) possède un dispositif de rattrapage comprenant la pièce de structure (710), de forme annulaire, compensant au moins l'usure des garnitures de friction (706a) d'un disque d'embrayage (706) fonctionnant de manière conjuguée avec l'embrayage à friction, où, pour l'ouverture et la fermeture normales de l'embrayage à friction (701), l'ensemble de leviers est mobile à l'intérieur d'une zone de pivotement (761) pratiquement constante, et le rattrapage pouvant être produit par le dispositif de compensation est déclenché par un mouvement pivotant de l'ensemble de leviers (709) qui, en regardant dans la direction de fermeture ou d'ouverture de l'embrayage à friction, est plus grand que la zone de pivotement normale (761) et déclenche la torsion relative.
